# EUROPEAN PATENT APPLICATION

(11) **EP 2 651 138 A1**
(43) Date of publication of application: **16.10.2013**
(21) Application number: 12848868.1
(22) Date of filing: 09.11.2012
(51) Int. Cl.: H04N 13/00

(54) **IMAGE DATA TRANSMITTING DEVICE, IMAGE DATA TRANSMITTING METHOD, IMAGE DATA RECEIVING DEVICE, AND IMAGE DATA RECEIVING METHOD**

(30) Priority: 18.11.2011 JP 2011253350
(71) Applicant: Sony Corporation, Tokyo 108-0075 (JP)
(72) Inventor: TSUKAGOSHI, Ikuo, Tokyo 108-0075 (JP)
(74) Representative: Ealey, Douglas Ralph
(86) International application number: PCT/JP2012/079064
(87) International publication number: WO 2013/073455

(57) **Abstract**

A reception side is configured to normally perform a cutout process appropriately based on cropping information.

A container of a predetermined format having a video stream in which the cropping information is inserted into a header portion, for example, a transport stream, is transmitted. Interpretation information of a parameter value of the cropping information is inserted into a high-order layer of the video stream. Even when image data is one of 2-dimensional image data and stereoscopic image data of a frame-compatible scheme, the reception side can appropriately interpret the cropping information based on the interpretation information. Accordingly, it is possible to appropriately perform the cutout process (cropping) based on the cropping information and correctly generate display image data.

## Description

### Technical Field

The present technology relates to an image data transmission device, an image data transmission method, an image data reception device, and an image data reception method, and more particularly, to an image data transmission device of an image transmission and reception system in which a transmission side transmits cropping information in addition to image data and a reception side performs a cutout process on the image data based on the cropping information.

### Background Art

For example, PTL 1 suggests a transmission scheme using television airwaves of stereoscopic image data. In this case, the stereoscopic image data including left-eye image data and right-eye image data is transmitted and stereoscopic image display is performed using binocular disparity in a television receiver.

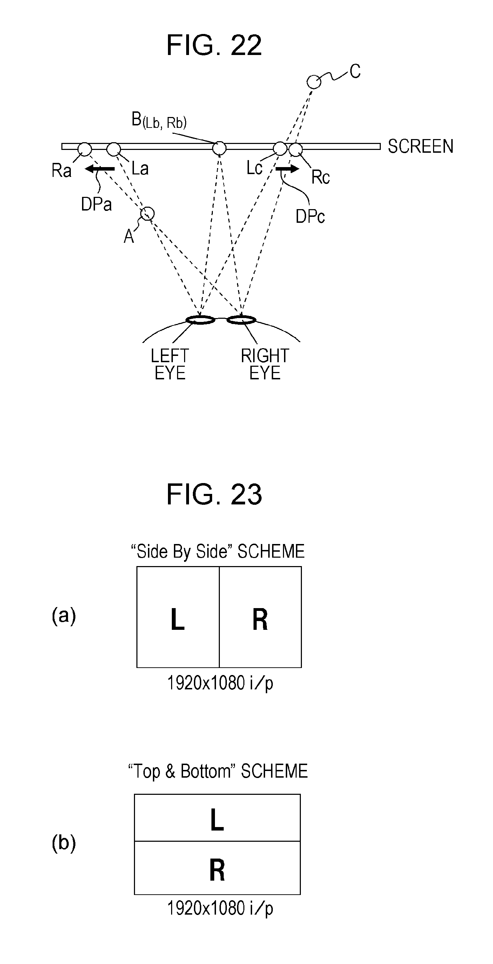

Fig. 22 is a diagram illustrating a relation between the display positions of left and right images of an object (body) on a screen and a reproduction position of its stereoscopic image (3D image) when stereoscopic image display is performed using binocular disparity. For example, since left and right lines of sight intersect with each other in front of the screen surface in regard to an object A displayed on a screen in such a manner that a left image La is deviated to the right side and a right image Ra is deviated to the left side on the screen, as illustrated, the reproduction position of its stereoscopic image is located in front of the screen surface. DPa indicates a parallax vector in the horizontal direction in regard to the object A.

For example, since left and right lines of sight intersect with each other on the screen surface in regard to an object B of which a left image Lb and a right image Rb are displayed at the same position on the screen, as illustrated, the reproduction position of its stereoscopic image is on the screen surface. For example, since left and right lines of sight intersect with each other in the rear of the screen surface in regard to an object C displayed on the screen in such a manner a left image Lc is deviated to the left side and a right image Rc is deviated to the right side on the screen, as illustrated, the reproduction position of its stereoscopic image is located in the rear of the screen surface. DPc indicates a parallax vector in the horizontal direction in regard to the object C.

In the past, frame-compatible schemes such as a side by side scheme and a top and bottom scheme have been known as a transmission format of stereoscopic image data. For example, Fig. 23(a) is a diagram illustrating the side by side scheme and Fig. 23(b) is a diagram illustrating the top and bottom scheme. Here, a case of a pixel format of 1920 × 1080 is illustrated.

The side by side scheme is a scheme of transmitting pixel data of left-eye image data in the first half in the horizontal direction and transmitting pixel data of right-eye image data in the second half in the horizontal direction, as illustrated in Fig. 23(a). In the case of this scheme, the pixel data in the horizontal direction in each of the left-eye image data and the right-eye image data is thinned out to 1/2 and a horizontal resolution is thus a half of the original signal.

As illustrated in Fig. 23(b), the top and bottom scheme is a scheme of transmitting data of each line of left-eye image data in the first half in the vertical direction and transmitting data of each line of right-eye image data in the second half in the vertical direction. In the case of this scheme, the lines of the left-eye image data and the right-eye image data are thinned out to 1/2 and a vertical resolution is a half of the original signal.

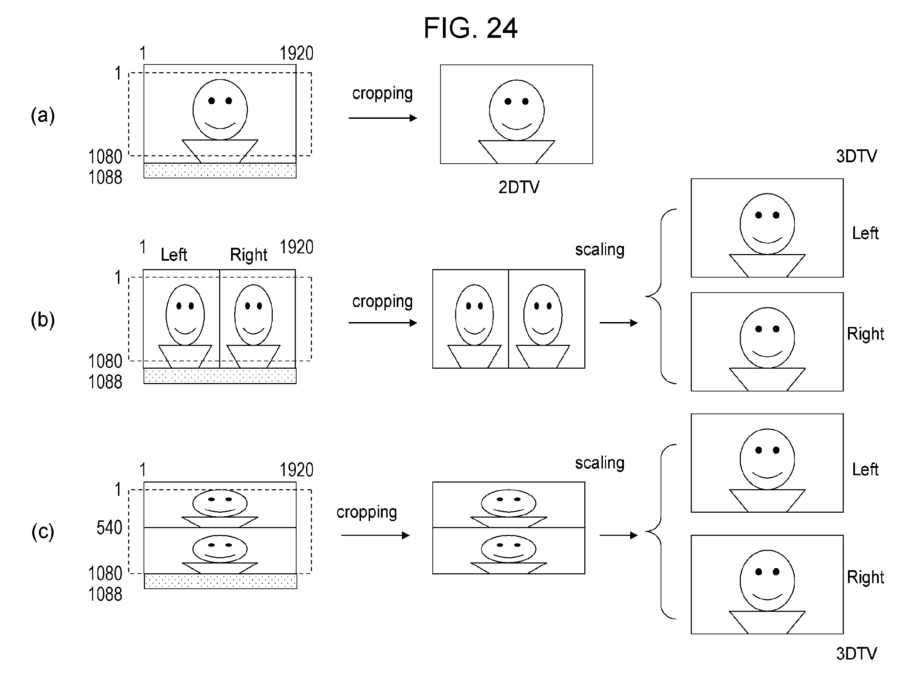

Hereinafter, a process of generating display image data on the reception side will be simply described. Fig. 24(a) schematically illustrates a process relevant to two-dimensional image data with a pixel format of 1920 × 1080. In this case, since encoding is performed on each block of 16 × 16 on the transmission side, 8 lines formed from blank data are added and the encoding is performed to obtain image data of 1920 pixels × 1088 lines.

Therefore, image data of 1920 pixels × 1088 lines can be obtained on the reception side after decoding. However, since the 8 lines in the image data are the blank data, the image data of 1920 pixels × 1080 lines including actual image data is cut out based on cropping information included in a video data stream and display image data for a two-dimensional television receiver (hereinafter, appropriately referred to as a "2D TV") is generated.

Fig. 24(b) is a diagram schematically illustrating a process relevant to stereoscopic image data (3-dimensional image data) of the side by side scheme with a pixel format of 1920 × 1080. Even in this case, since the encoding is performed on each block of 16 × 16 on the transmission side, 8 lines formed from blank data are added and the encoding is performed to obtain image data of 1920 pixels × 1088 lines.

Therefore, image data of 1920 pixels × 1088 lines can be obtained on the reception side after decoding. However, since the 8 lines in the image data are the blank data, the image data of 1920 pixels × 1080 lines including actual image data is cut out based on cropping information included in a video data stream. Then, the image data is halved into left and right data, a scaling process is performed on each data, and left-eye display image data and right-eye display image data of a stereoscopic television receiver (hereinafter, appropriately referred to as a "3D TV") are generated.

Fig. 24(c) is a diagram schematically illustrating a process relevant to stereoscopic image data (3-dimensional image data) of the top and bottom scheme with a pixel format of 1920 × 1080. Even in this case, since the encoding is performed on each block of 16 × 16 on the transmission side, 8 lines formed from blank data are added and the encoding is performed to obtain image data of 1920 pixels × 1088 lines.

Therefore, image data of 1920 pixels × 1088 lines can be obtained on the reception side after decoding. However, since the 8 lines in the image data are the blank data, the image data of 1920 pixels × 1080 lines including actual image data is cut out based on cropping information included in a video data stream. Then, the image data is halved into top and bottom data, a scaling process is performed on each data, and left-eye display image data and right-eye display image data of a 3D TV are generated.

### Citation List

### Patent Literature

PTL 1: Japanese Unexamined Patent Application Publication No. 2005-6114

### Summary of Invention

### Technical Problem

When image data of 1920 pixels × 1080 lines is cut out and display image data for the 2D TV is generated in the 2D TV in a case of stereoscopic image data of the side by side scheme or the top and bottom scheme described above, an unnatural image in which left and right identical images or top and bottom identical images are arranged is displayed.

Accordingly, in order to prevent the unnatural image from being displayed in the 2D TV, the cropping information included in the video data stream can be considered to be set as information used to cut out only one of the left-eye image data and the right-eye image data, for example, only the left-eye image data. In this case, a process of the 2D TV and the 3D TV is performed as follows.

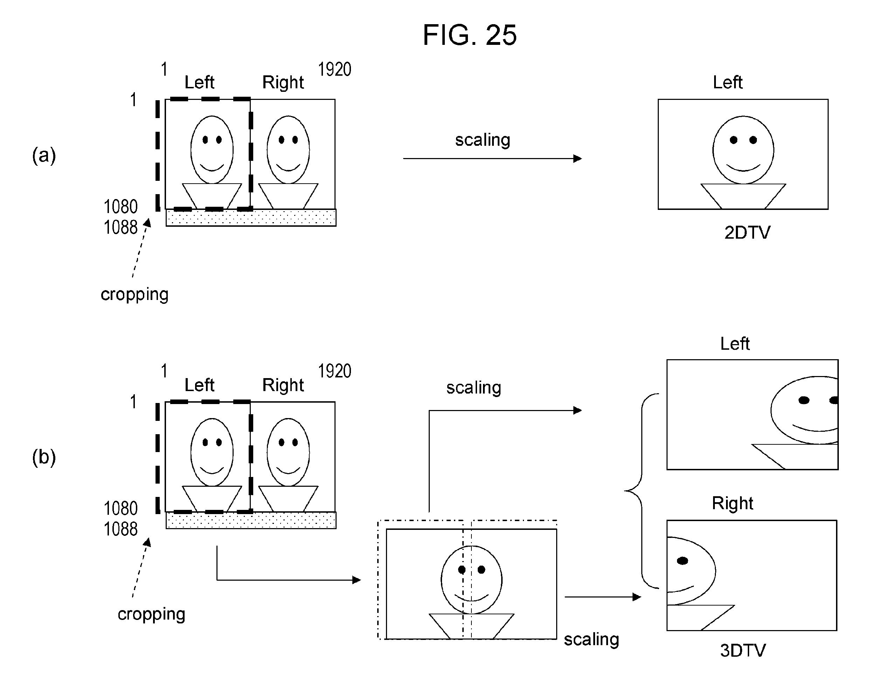

Fig. 25(a) is a diagram schematically illustrating a process on the stereoscopic image data (3-dimensional image data) of the side by side scheme with the pixel format of 1920 × 1080 in the 2D TV. In the 2D TV, image data of 1920 pixels × 1088 lines can be obtained after the decoding, but 8 lines in the image data are blank data. In this case, based on the cropping information, left-eye image data of 960 pixels × 1080 lines is cut out from the image data of 1920 pixels × 1080 lines including actual image data. Then, a scaling process is performed on the left-eye image data to generate display image data for the 2D TV. In this case, correct 2-dimensional display (2D display) is performed.

On the other hand, Fig. 25(b) is a diagram schematically illustrating a process on stereoscopic image data (3-dimensional image data) of the side by side scheme with the pixel format of 1920 × 1080 in the 3D TV. Even in the 3D TV, image data of 1920 pixels × 1088 lines can be obtained after the decoding, but 8 lines in the image data are blank data. In this case, based on the cropping information, left-eye image data of 960 pixels × 1080 lines is cut out from the image data of 1920 pixels × 1080 lines including actual image data.

Then, a scaling process is performed on the left-eye image data to generate image data of 1920 pixels × 1080 lines. This image data is the same as the above-described display image data of the 2D TV. Since the side by side scheme is used in the 3D TV, the image data is halved into left and right data and the scaling process is performed on each of the image data to generate the left-eye display image data and the right-eye display image data for the 3D TV. In this case, since a left-eye image and a right-eye image are one and the other of the left and right images halved from one image, respectively, correct stereoscopic display (3D display) is not performed.

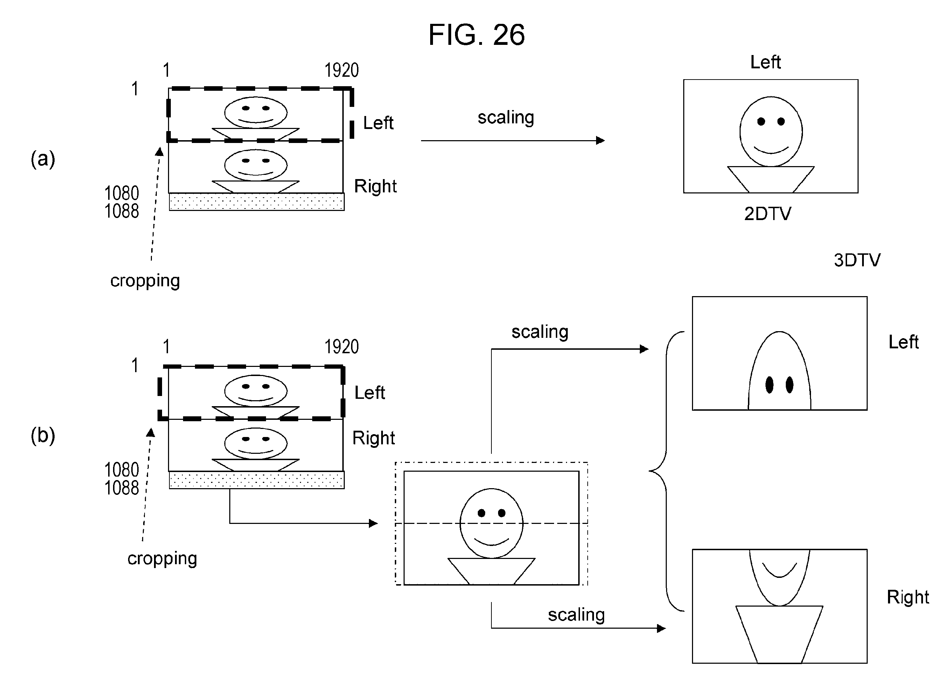

Fig. 26(a) is a diagram schematically illustrating a process on stereoscopic image data (3-dimensional image data) of the top and bottom scheme with the pixel format of 1920 × 1080 in the 2D TV. In the 2D TV, image data of 1920 pixels × 1088 lines can be obtained after the decoding, but 8 lines in the image data are blank data. In this case, based on the cropping information, left-eye image data of 1920 pixels × 540 lines is cut out from the image data of 1920 pixels × 1080 lines including actual image data. Then, a scaling process is performed on the left-eye image data to generate display image data for the 2D TV. In this case, the correct 2-dimensional display (2D display) is performed.

On the other hand, Fig. 26(b) is a diagram schematically illustrating a process on stereoscopic image data (3-dimensional image data) of the top and bottom scheme with the pixel format of 1920 × 1080 in the 3D TV. In the 3D TV, image data of 1920 pixels × 1088 lines can be obtained after the decoding, but 8 lines in the image data are blank data. In this case, based on the cropping information, left-eye image data of 1920 pixels × 540 lines is cut out from the image data of 1920 pixels × 1080 lines including actual image data.

Then, a scaling process is performed on the left-eye image data to generate image data of 1920 pixels × 1080 lines. This image data is the same as the above-described display image data of the 2D TV. Since the top and bottom scheme is used in the 3D TV, the image data is halved into top and bottom data and the scaling process is performed on each of the image data to generate the left-eye display image data and the right-eye display image data for the 3D TV. In this case, since a left-eye image and a right-eye image are one and the other of the top and bottom images halved from one image, respectively, correct stereoscopic display (3D display) is not performed.

An object of the present technology is to appropriately perform a cutout process based on cropping information on a reception side and correctly be able to generate display image data.

### Solution to Problem

According to a concept of the present technology, an image data transmission device includes:
an image data transmission unit that transmits a container of a predetermined format having a video stream which includes image data and in which cropping information is inserted into a header portion; and
an information insertion unit that inserts interpretation information of a parameter value of the cropping information into a high-order layer of the video stream.

In the present technology, the image data transmission unit transmits the container of the predetermined format having the video stream which includes the image data and in which the cropping information is inserted into the header portion. For example, the container may be a transport stream (MPEG-2TS) used in a digital broadcast standard. For example, the container may be a container of MP4 or another format used, for example, in delivery of the Internet.

The information insertion unit inserts the interpretation information of the parameter value of the cropping information into the high-order layer of the video stream. For example, the container may be a transport stream and the information insertion unit may insert the interpretation information under a program map table or an event information table. For example, the information insertion unit may describe the interpretation information in a descriptor inserted under the program map table or the event information table.

For example, the video stream is encoded data of H.264/AVC or HEVC. The cropping information may be defined in a sequence parameter set of the video stream. The information insertion unit may describe the interpretation information in the descriptor inserted under the program map table or the event information table.

For example, when the image data is stereoscopic image data in which left-eye image data and right-eye image data are divided and arranged in the horizontal direction or the vertical direction in the same frame, that is, so-called stereoscopic image data of a frame-compatible scheme, the interpretation information is considered to indicate that the parameter value of the cropping information is specially interpreted. In this case, when the image data is 2-dimensional image data, the interpretation information is considered to indicate that the parameter value of the cropping information is interpreted without change.

For example, when the image data is stereoscopic image data in which left-eye image data and right-eye image data are divided and arranged in the horizontal direction or the vertical direction in the same frame, the interpretation information may indicate that the parameter value of the cropping information is interpreted such that a cropping region is doubled in the horizontal direction or the vertical direction. For example, when the image data is stereoscopic image data of the side by side scheme, the interpretation information indicates that the parameter value is interpreted such that a cropping region is doubled in the horizontal direction. For example, when the image data is stereoscopic image data of the top and bottom scheme, the interpretation information indicates that the parameter value is interpreted such that a cropping region is doubled in the vertical direction. In this case, the interpretation information designates the interpretation of the parameter value of the cropping information.

In the present technology, the interpretation information of the parameter value of the cropping information is inserted into the high-order layer of the video stream. Therefore, even when the image data is any one of the 2-dimensional image data and the stereoscopic image data of the frame-compatible scheme, the reception side can appropriately interpret the parameter value of the cropping information based on the interpretation information. Accordingly, it is possible to appropriately perform the cutout process (cropping) based on the cropping information and correctly generate display image data.

In the present technology, for example, the image data may be the 2-dimensional image data or the stereoscopic image data in which left-eye image data and right-eye image data are divided and arranged in the horizontal direction or the vertical direction in the same frame. The information insertion portion may be configured to insert the interpretation information changed according to the switched image data into the high-order layer of the video stream at a timing prior to a switching timing of the 2-dimensional image data and the stereoscopic image data.

In this case, the reception side can acquire the interpretation information changed according to the switched image data before the switching timing of the 2-dimensional image data and the stereoscopic image data. Accordingly, the image data cutout process (cropping) can be performed by the interpretation of the parameter value of the cropping information suitable for the switched image data immediately from the switching timing. Thus, it is possible to prevent an unnatural image from being displayed due to the switching of the image data.

According to another concept of the present technology, an image data reception device includes
an image data reception unit that receives a container of a predetermined format having a video stream which includes image data and in which cropping information is inserted into a header portion.
Interpretation information of a parameter value of the cropping information is inserted into a high-order layer of the video stream.
The image data reception device further includes
an information acquisition unit that acquires the interpretation information from the container;
a decoding unit that decodes the video stream included in the container to acquire the image data and the cropping information;
and an image data processing unit that interprets the parameter value of the cropping information based on the interpretation information and cuts out image data of a predetermined region from the image data to generate display image data.

In the present technology, the image data reception unit receives the container of the predetermined format having the video stream which includes image data and in which the cropping information is inserted into the header portion, for example, the transport stream. Here, the interpretation information of the parameter value of the cropping information is inserted into the high-order layer of the video stream.

The information acquisition unit acquires the interpretation information from the container. The decoding unit decodes the video stream included in the container and acquires the image data and the cropping information. The image data processing unit interprets the parameter value of the cropping information based on the interpretation information and cuts the image data of the predetermined region from the image data to generate the display image data.

Thus, in the present technology, the container of the predetermined format having the video stream in which the cropping information is inserted into the header portion is received. However, the interpretation information of the cropping information is inserted into the high-order layer of the video stream. Therefore, even when the image data is any one of the 2-dimensional image data and the stereoscopic image data of the frame-compatible scheme, the cropping information can appropriately be interpreted based on the interpretation information. Accordingly, it is possible to appropriately perform the cutout process based on the cropping information and correctly generate the display image data.

In the present technology, for example, the image data may be any one of the 2-dimensional image data and the stereoscopic image data in which left-eye image data and right-eye image data are divided and arranged in the horizontal direction or the vertical direction in the same frame. At a timing prior to a switching timing of the two-dimensional image data and the stereoscopic image data, the interpretation information changed according to the switched image data may be inserted into the high-order layer of the video stream. From the switching timing of the image data, the image data processing unit may interpret the parameter value of the cropping information based on the interpretation information inserted at a timing prior to the switching timing and changed according to the switched image data.

In this case, the image data cutout process can appropriately be performed by the interpretation of the parameter value of the cropping information suitable for the switched image data immediately from the switching timing. Thus, even when the acquisition of the interpretation information is not synchronized with the switching timing of the image data, it is possible to prevent an unnatural image from being displayed.

### Advantageous Effects of Invention

According to the present technology, it is possible to appropriately perform the cutout process based on the cropping information on the reception side and correctly generate the display image data.

### Brief Description of Drawings

[Fig. 1] Fig. 1 is a block diagram illustrating an example of the configuration of an image transmission and reception system according to an embodiment.
[Fig. 2] Fig. 2 is a diagram illustrating an example of the data structure of an access unit in a video stream.
[Fig. 3] Fig. 3 is a diagram illustrating the structure of cropping information defined in an SPS (Sequence Parameter Set) of the access unit.
[Fig. 4] Fig. 4 is a diagram schematically illustrating a process of receiving stereoscopic image data of a side by side scheme with a pixel format of 1920 × 1080.
[Fig. 5] Fig. 5 is a diagram schematically illustrating a process of receiving stereoscopic image data of a top and bottom scheme with a pixel format of 1920 × 1080.
[Fig. 6] Fig. 6 is a block diagram illustrating an example of the configuration of a transmission data generation unit of a broadcast station included in an image transmission and reception system.
[Fig. 7] Fig. 7 is a diagram illustrating an example of the configuration of a transport stream TS.
[Fig. 8] Fig. 8 is a diagram illustrating an example of another configuration of a transport stream TS.
[Fig. 9] Fig. 9 is a diagram illustrating an exemplary configuration (Syntax) of an "AVC_video_descriptor."
[Fig. 10] Fig. 10 is a diagram illustrating regulation contents (Semantics) of the "AVC_video_descriptor."
[Fig. 11] Fig. 11 is a diagram illustrating an exemplary configuration (Syntax) of a "Cropping_interpretation_descriptor."
[Fig. 12] Fig. 12 is a block diagram illustrating an example of the configuration of a receiver included in the image transmission and reception system.
[Fig. 13] Fig. 13 is a flowchart illustrating an example of a cropping control process of a CPU in the receiver.
[Fig. 14] Fig. 14 is a diagram illustrating an example of flag information of a "cropping_normal_interpretation_flag" described in an AVC video descriptor under a PMT at the time of an operation.
[Fig. 15] Fig. 15 is a diagram illustrating an example of the configuration of a transport stream TS.
[Fig. 16] Fig. 16 is a diagram illustrating an example of another configuration of a transport stream TS.
[Fig. 17] Fig. 17 is a diagram illustrating an exemplary configuration (Syntax) of an "AVC_video_descriptor."
[Fig. 18] Fig. 18 is a diagram illustrating regulation contents (Semantics) of the "AVC_video_descriptor."
[Fig. 19] Fig. 19 is a diagram illustrating an exemplary configuration (Syntax) of a "Cropping_interpretation_descriptor."
[Fig. 20] Fig. 20 is a flowchart illustrating an example of a cropping control process of a CPU in the receiver.
[Fig. 21] Fig. 21 is a diagram illustrating an example of mode information at the time of an operation in a "cropping_interpretation_mode" described in an AVC video descriptor under a PMT.
[Fig. 22] Fig. 22 is a diagram illustrating a relation between the display positions of right and left images of an object on a screen and a reproduction position of its stereoscopic image when stereoscopic image display is performed using binocular disparity.
[Fig. 23] Fig. 23 is a diagram illustrating examples (a side by side scheme and a top and bottom scheme) of a transmission format of stereoscopic image data.
[Fig. 24] Fig. 24 is a diagram illustrating a process of generating display image data on a reception side.
[Fig. 25] Fig. 25 is a diagram illustrating image processing in the side by side scheme of using cropping information according to the related art.
[Fig. 26] Fig. 26 is a diagram illustrating image processing in the top and bottom scheme of using cropping information according to the related art.

### Description of Embodiments

Hereinafter, a mode (hereinafter, referred to as an "embodiment") for carrying out the invention will be described. The description will be made in the following order.
1. Embodiment
2. Modification Examples

### <1. Embodiment>

### [Image Transmission and Reception System]

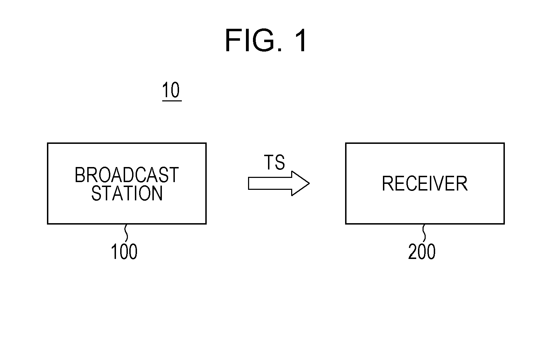

Fig. 1 is a diagram illustrating an example of the configuration of an image transmission and reception system 10 according to an embodiment. The image transmission and reception system 10 includes a broadcast station 100 and a receiver (3D TV) 200. The broadcast station 100 loads a transport stream TS having a video stream that includes image data on an airwave to transmit the transport stream TS.

The image data included in the video stream is 2-dimensional image data or stereoscopic image data of a so-called frame-compatible scheme in which left-eye image data and right-eye image data are divided and arranged in the horizontal direction or the vertical direction in the same frame. Examples of the transmission format of the stereoscopic image data include a side by side method (see Fig. 23(a)) and a top and bottom scheme (see Fig. 23(b)).

In this embodiment, a pixel format of the image data is assumed to be 1920 × 1080. The broadcast station 100 performs encoding on the image data for each block of 16 × 16. Therefore, the broadcast station 100 adds 8 lines formed from blank data and performs the encoding to obtain the image data of 1920 pixels × 1088 lines.

Cropping information is inserted into a header portion of the video stream. When the image data is 2-dimensional image data, the cropping information serves as information that is used to cut out image data of 1920 pixels × 1080 lines including actual image data from the decoded image data of 1920 pixels × 1088 lines.

The cropping information serves as information that is used to cut out actual left-eye image data or actual right-eye image data from the decoded image data of 1920 pixels × 1088 lines when the image data is stereoscopic image data of the frame-compatible scheme. For example, in stereoscopic image data of the side by side scheme, the cropping information serves as information that is used to cut out image data of 960 pixels × 1080 lines. Further, for example, in stereoscopic image data of the top and bottom scheme, the cropping information serves as information that is used to cut out image data of 1920 pixels × 540 lines.

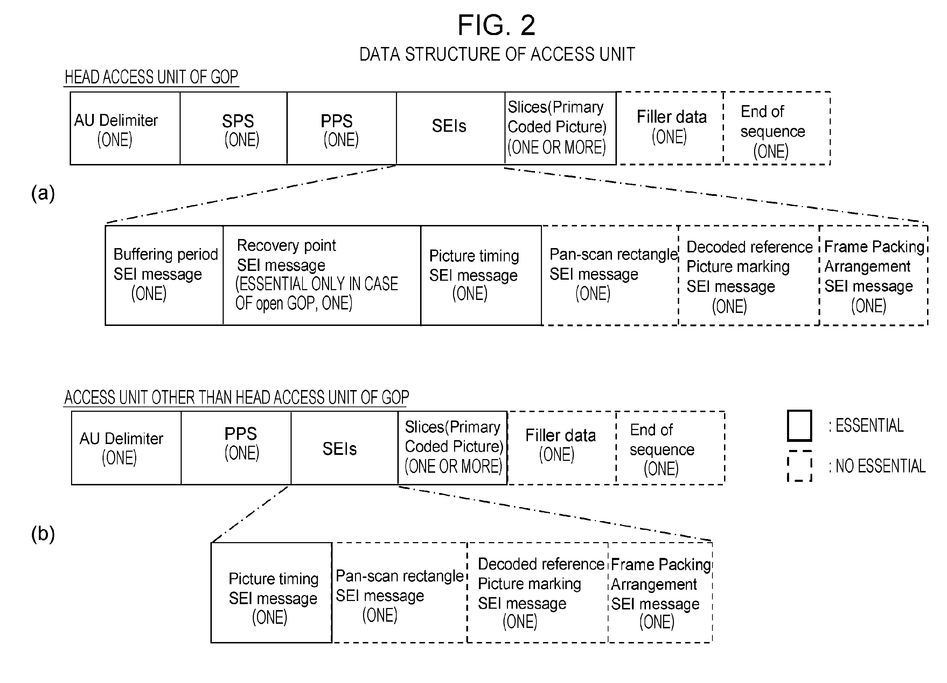

In this embodiment, the video data stream is, for example, an H.264/AVC (Advanced Video Coding) stream. The cropping information is defined in a sequence parameter set (SPS) of the video stream. Figs. 2(a) and 2(b) are diagrams illustrating examples of the data structures of access units in the video data stream. H.264 defines a picture as a unit called an access unit. Fig. 2(a) is a diagram illustrating the structure of the head access unit of a GOP (Group Of Pictures). Fig. 2(b) is a diagram illustrating the structure of the access unit other than the head access unit of the GOP.

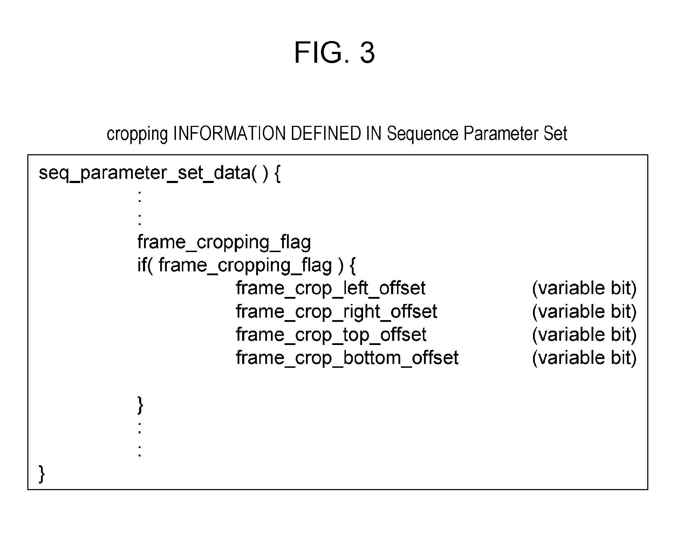

The cropping information is inserted into a portion of an SPS (Sequence Parameter Set) present in the head access unit of the GOP. Fig. 3 is a diagram illustrating the structure (Syntax) of the cropping information defined in the SPS. In the SPS, whether the cropping information is present is indicated by flag information of "frame_cropping_flag." The cropping information is information that designates a rectangular region as a cutout region of the image data.

"frame_crop_left_offset" indicates a start position in the horizontal direction, that is, a left end position.
"frame_crop_right_offset" indicates an end position in the horizontal direction, that is, a right end position. "frame_crop_top_offset" indicates a start position in the vertical direction, that is, a top end position. "frame_crop_bottom_offset" indicates an end position in the vertical direction, that is, a bottom end position. All are expressed by offset values from the left and top position.

When the image data is stereoscopic image data, "Frame Packing Arrangement SEI message" is inserted into the portion of the SEIs of the access unit. The SEI includes type information indicating which transmission format of stereoscopic image data the image data has.

In the transport stream TS, interpretation information of a parameter value of the cropping information is inserted into a high-order layer of the video stream. This interpretation information is inserted under, for example, a program map table (PMT). Specifically, for example, this interpretation information is described in a descriptor that is inserted under a video elementary loop of the program map table. The descriptor is, for example, a known AVC video descriptor or a newly defined cropping interpretation descriptor (Cropping_interpretation_descriptor).

When the image data is stereoscopic image data of a frame-compatible scheme, the interpretation information indicates that a parameter value of the cropping information is specially interpreted. Further, when the image data is 2-dimensional image data, the interpretation information indicates that a parameter value of the cropping information has to be interpreted without change. The interpretation information is inserted at a timing prior to a switching timing of the 2-dimensional image data and the stereoscopic image data.

The receiver 200 receives the transport stream TS loaded on the airwaves and transmitted from the broadcast station 100. The receiver 200 acquires the interpretation information of the parameter value of the cropping information inserted into the high-order layer of the video stream, as described above, from the transport stream TS. Further, the receiver 200 decodes the video stream and acquires the image data and the cropping information.

The receiver 200 interprets the parameter value of the cropping information based on the interpretation information, cuts out image data of a predetermined region, and generates display image data from the image data. For example, when the image data is 2-dimensional image data, the cropping information serves as information that is used to cut out image data of 1920 pixels × 1080 lines including actual image data from the decoded image data of 1920 pixels × 1088 lines. In this case, the receiver 200 interprets the parameter value of the cropping information without change, cuts out the image data of 1920 pixels × 1080 lines including actual image data from the decoded image data of 1920 pixels × 1088 lines, and generates image data of 2-dimensional image display.

For example, when the image data is stereoscopic image data of the frame-compatible scheme, the cropping information serves as information that is used to cut out actual left-eye image data or actual right-eye image data from the decoded image data of 1920 pixels × 1088 lines. In this case, the receiver 200 interprets the parameter value of the cropping information such that a cropping region is doubled in the horizontal direction or the vertical direction. Then, the receiver 200 cuts out the image data of 1920 pixels × 1080 lines including actual image data from the decoded image data of 1920 pixels × 1088 lines, performs a scaling process on each of left-eye and right-eye image data portions, and generates left-eye image data and right-eye image data for stereoscopic image display.

As described above, the interpretation information is inserted at a timing prior to a switching timing of the 2-dimensional image data and the stereoscopic image data. From the switching timing of the image data, the receiver 200 interprets the parameter value of the cropping information based on the interpretation information inserted at the timing prior to the switching timing and changed according to the switched image data. That is, the receiver 200 cuts out the image data by the interpretation of the cropping information suitable for the switched image data immediately from the switching timing and generates the display image data.

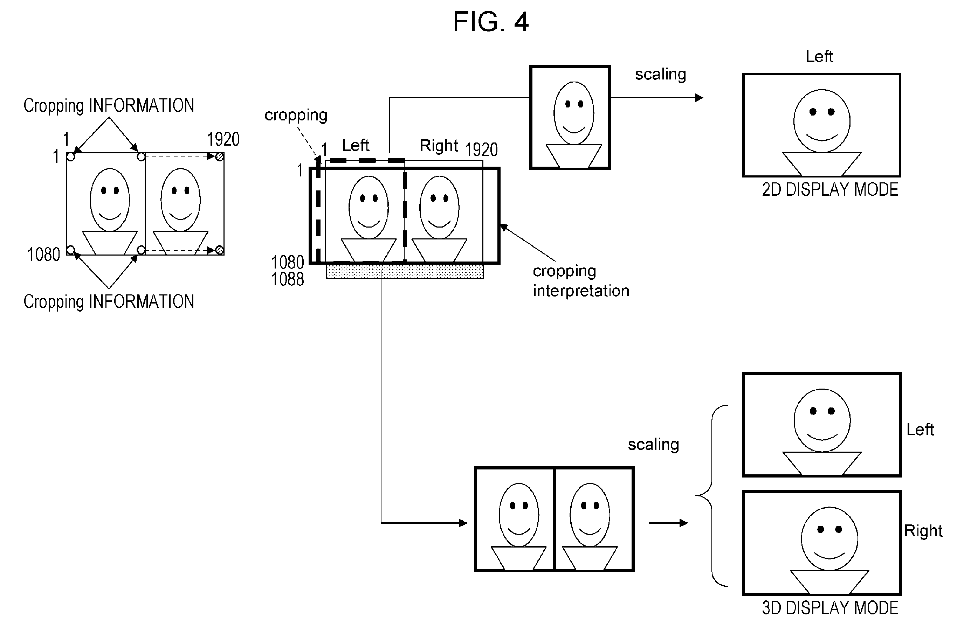

Fig. 4 is a diagram schematically illustrating a process of receiving the stereoscopic image data of the side by side scheme in the pixel format of 1920 × 1080. After the decoding, the image data of 1920 pixels × 1088 lines can be obtained, but 8 lines in the image data are blank data.

In a case of a 2-dimensional (2D) display mode, the cropping information (in which an offset position is indicated by a white ○ mark) is interpreted without change. Therefore, based on the cropping information, for example, left-eye image data of 960 pixels × 1080 lines is cut out from the image data of 1920 pixels × 1080 lines including the actual image data. Then, the scaling process is performed on the left-eye image data in the horizontal direction to generate image data for 2-dimensional image display. In this case, a 2-dimensional image is correctly displayed.

In a case of a stereoscopic (3D) display mode, the cropping information (in which an offset position is indicated by a white ○ mark) is interpreted such that a cropping region is doubled in the horizontal direction (where an offset change position is indicated by a hatched mark ○). Therefore, based on the cropping information, the image data of 1920 pixels × 1080 lines including the actual image data is cut out. The cut image data is halved into left and right images from the stereoscopic image data of the side by side scheme and the scaling process is performed in the horizontal direction to generate the left-eye image data and the right-eye image data for the stereoscopic image data. In this case, a stereoscopic image is correctly displayed.

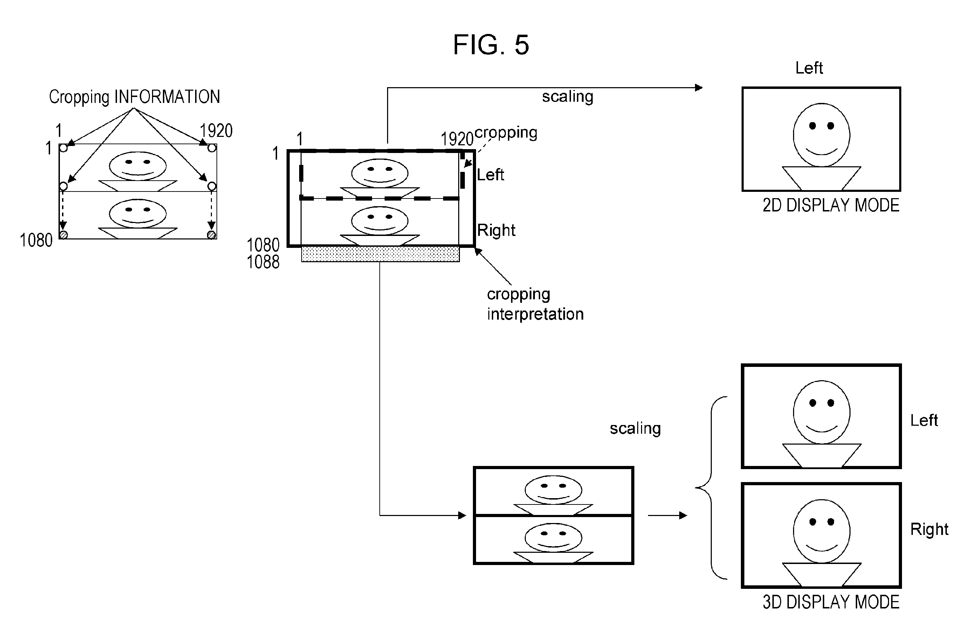

Fig. 5 is a diagram schematically illustrating a process of receiving stereoscopic image data of the top and bottom scheme in the pixel format of 1920 × 1080. After the decoding, the image data of 1920 pixels × 1088 lines can be obtained, but 8 lines in the image data are blank data.

In the case of the 2-dimensional (2D) display mode, the cropping information (in which an offset position is indicated by a white ○ mark) is interpreted without change. Therefore, based on the cropping information, for example, left-eye image data of 1920 pixels × 540 lines is cut out from the image data of 1920 pixels × 1080 lines including the actual image data. Then, the scaling process is performed on the left-eye image data in the vertical direction to generate image data for 2-dimensional image display. In this case, a 2-dimensional image is correctly displayed.

In the case of the stereoscopic (3D) display mode, the cropping information (in which an offset position is indicated by a white ○ mark) is interpreted such that a cropping region is doubled in the vertical direction (where an offset change position is indicated by a hatched mark ○). Therefore, based on the cropping information, the image data of 1920 pixels × 1080 lines including the actual image data is cut out. The cut image data is halved into top and bottom images from the stereoscopic image data of the top and bottom scheme and the scaling process is performed in the vertical direction to generate the left-eye image data and the right-eye image data for the stereoscopic image display. In this case, a stereoscopic image is correctly displayed.

### [Example of Configuration of Transmission Data Generation Unit]

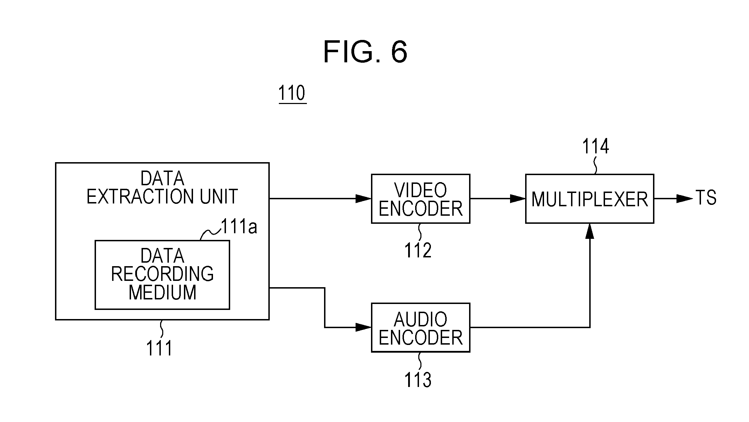

Fig. 6 is a diagram illustrating an example of the configuration of a transmission data generation unit 110 that generates the above-described transport stream TS in the broadcast station 100. The transmission data generation unit 110 includes a data extraction unit (achieving unit) 111, a video encoder 112, an audio encoder 113, and a multiplexer 114.

For example, a data recording medium 111a is detachably mounted on the data extraction unit 111. The data recording medium 111a is, for example, a disc-form recording medium or a semiconductor memory. The data recording medium 111a records image data of a plurality of programs transmitted by the transport stream TS.

The image data of each program is configured as, for example, 2-dimensional image data or stereoscopic image data (hereinafter, simply referred to as "stereoscopic image data") of the frame-compatible scheme. The transmission format of the stereoscopic image data is, for example, the side by side scheme or the top and bottom scheme (see Figs. 23(a) and 23(b)). The data extraction unit 111 sequentially extracts and outputs image data and audio data of transmission target programs from the data recording medium 111a.

The video encoder 112 performs encoding of H.264/AVC (Advanced Video Coding) on the image data output from the data extraction unit 111 to obtain encoded video data. In the video encoder 112, a stream formatter (not illustrated) provided on a rear stage generates a video stream (video elementary stream) including the encoded video data. At this time, the video encoder 112 inserts the cropping information into the header portion of the video stream. As described above, the cropping information is inserted into a portion of the SPS (Sequence Parameter Set) present in the head access unit of the GOP (see Fig. 2(a)).

The audio encoder 113 performs encoding of MPEG-2 Audio AAC or the like on the audio data output from the data extraction unit 111 to generate an audio stream (audio elementary stream). The multiplexer 114 packets and multiplexes each of the elementary streams generated by the video encoder 112 and the audio encoder 113 to generate the transport stream (multiplexed data stream) TS.

Here, the multiplexer 114 inserts the interpretation information of the parameter value of the cropping information into the high-order layer of the video stream. The multiplexer 114 inserts the interpretation information corresponding to the switched image data at a timing prior to the switching timing of the 2-dimensional image data and the stereoscopic image data.

As described above, for example, the interpretation information is described in the descriptor inserted under the video elementary loop of the program map table. The descriptor is, for example, a known AVC video descriptor or a newly defined cropping interpretation descriptor (Cropping_interpretation_descriptor).

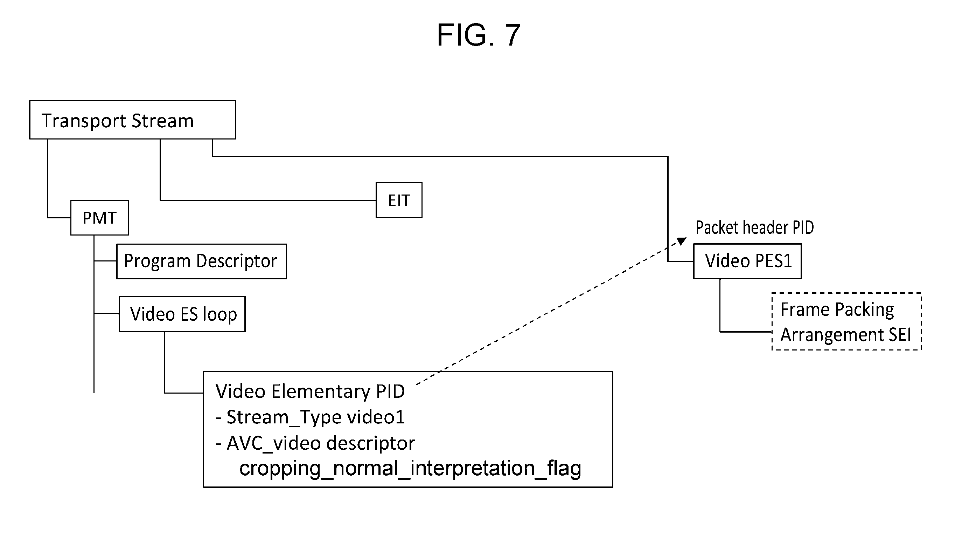

Fig. 7 is a diagram illustrating an example of the configuration of the transport stream TS. The example of the configuration is an example in which flag information of "cropping_normal_interpretation_flag" serving as the interpretation information of the parameter value of the cropping information is described in the known AVC video descriptor.

In the example of the configuration, a PES packet, "Video PES1," of the video stream is included. In the video stream, when the included image data is stereoscopic image data, "Frame Packing Arrangement SEI message" is inserted into a portion of the SEIs of the access unit, as described above. The SEI includes the type information indicating which transmission format of stereoscopic image data the image data has.

The transport stream TS includes a PMT (Program Map Table) as PSI (Program Specific Information). The PSI is information describing to which program each elementary stream included in the transport stream belongs. The transport stream further includes an EIT (Event Information Table) as SI (Serviced Information) used to manage an event unit.

In the PMT, there is a program descriptor (Program Descriptor) describing information regarding the entire program. In the PMT, there is an elementary loop having information regarding each elementary stream. In the example of the configuration, there is a video elementary loop (Video ES loop).

In the elementary loop, information such as a packet identifier (PID) is arranged for each stream and a descriptor describing information regarding the elementary stream is also arranged. In the example of the configuration, an audio is not illustrated to simplify the drawing.

In the example of the configuration, flag information of "cropping_normal_interpretation_flag" is described in "AVC_video_descriptor" included in the video elementary loop (Video ES loop).

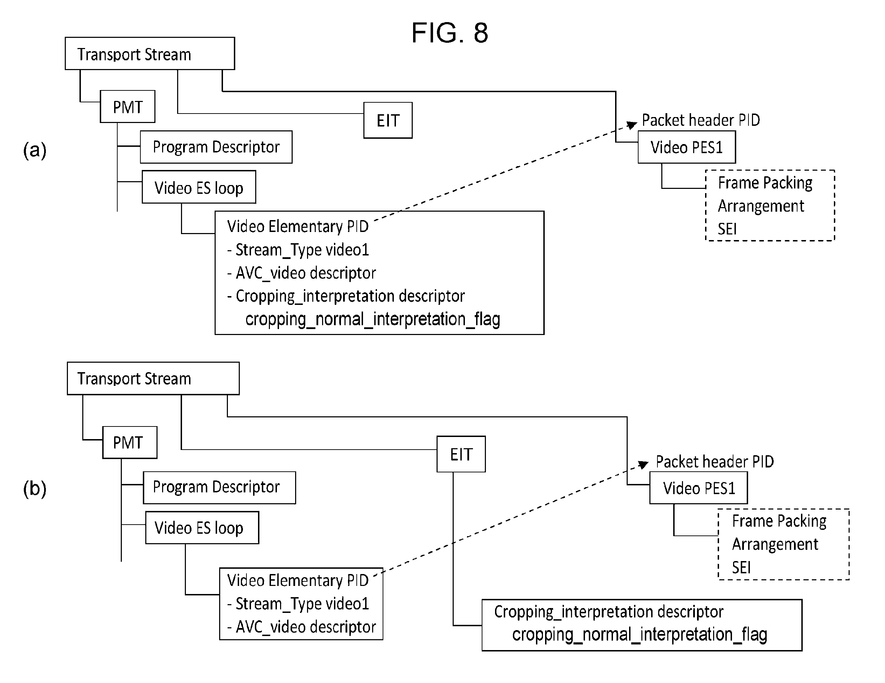

Fig. 8(a) is a diagram illustrating an example of another configuration of the transport stream TS. The example of the configuration is an example in which flag information of "cropping_normal_interpretation_flag" serving as the interpretation information of the parameter value of the cropping information is described in a newly defined cropping interpretation descriptor.

In the example of the configuration, flag information of "cropping_normal_interpretation_flag" is described in "Cropping_interpretation_descriptor" inserted into the video elementary loop (Video ES loop). Although the detailed description is omitted, the remaining configuration is the same as the example of the configuration illustrated in Fig. 7.

When the interpretation of the parameter value of the cropping information is changed at each event, "Cropping_interpretation_descriptor" can be considered to be inserted under the EIT, as illustrated in Fig. 8(b).

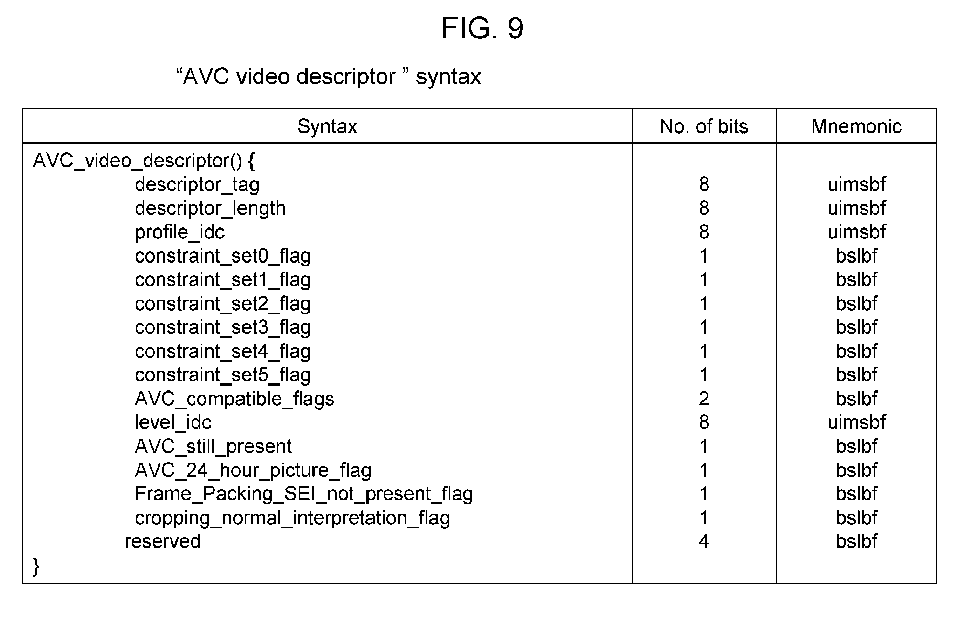

Fig. 9 is a diagram illustrating an example of the structure (Syntax) of "AVC_video_descriptor." The descriptor itself already satisfies the H.264/AVC standard. Here, 1-bit flag information of "cropping_normal_interpretation_flag" is newly defined in the descriptor.

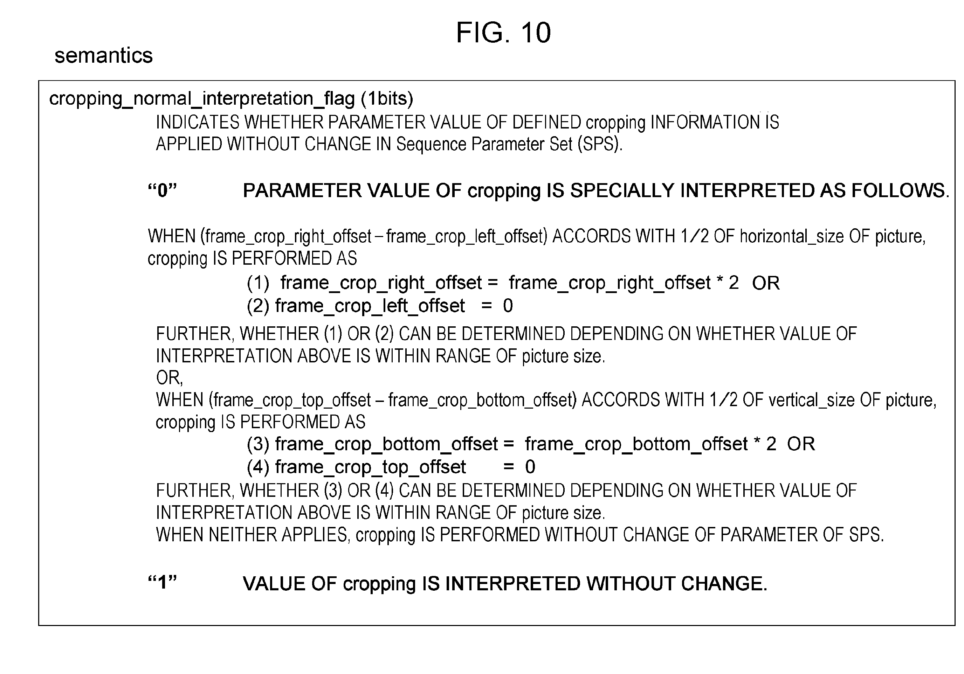

As indicated in the regulation contents (semantics) in Fig. 10, the flag information indicates whether the parameter value of the cropping information defined in the SPS (Sequence Parameter Set) in the head access unit of the GOP is applied without change, in other words, whether the parameter value of the cropping information is specially interpreted.

When the flag information is "0," the flag information indicates that the parameter value of the cropping information is specially interpreted. At this time, when (frame_crop_right_offset - frame_crop_left_offset) accords with 1/2 of the size (horizontal_size) of the picture in the horizontal direction, the receiver sets a position at which the cropping is performed by substituting the right-hand side into the left-hand side in each of (1) and (2) below and performs the cropping based on the position at which the cropping is performed. Further, (1) or (2) can be determined depending on whether the interpretation value in (1) is within the range of the picture size.

(1) frame_crop_right_offset = frame_crop_right_offset * 2
(2) frame_crop_left_offset = 0

At this time, when (frame_crop_bottom_offset - frame_crop_top_offset) accords with 1/2 of the size (vertical_size) of the picture in the vertical direction, the receiver sets a position at which the cropping is performed by substituting the right-hand side into the left-hand side in each of (3) and (4) below and performs the cropping based on the position at which the cropping is performed. Further, (3) or (4) can be determined depending on whether the interpretation value in (3) is within the range of the picture size.

(3) frame_crop_bottom_offset = frame_crop_bottom_offset * 2
(4) frame_crop_top_offset = 0

When the flag information is "0" but neither of the above descriptions applies, the receiver interprets the parameter value of the cropping information defined in the SPS without change and performs the cropping.

When the flag information is "1," the receiver interprets the parameter value of the cropping information defined in the SPS without change and performs the cropping.

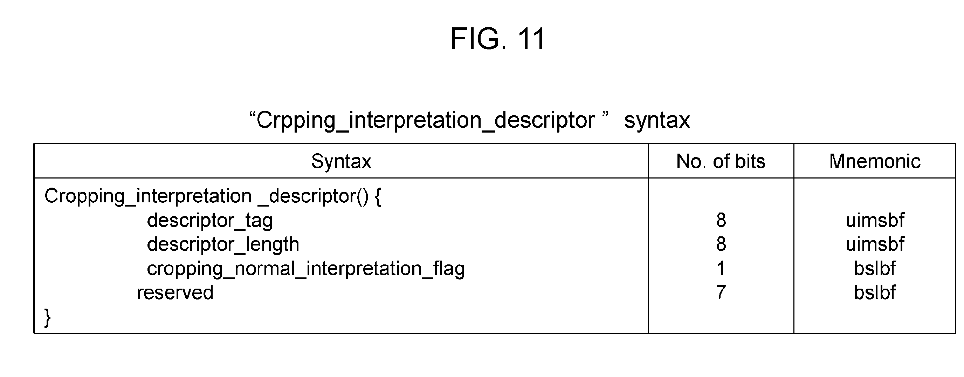

Fig. 11 is a diagram illustrating an example of the structure (Syntax) of "Cropping_interpretation_descriptor." An 8-bit field of "descriptor_tag" indicates that this descriptor is "Cropping_interpretation_descriptor." An 8-bit field of "descriptor_length" indicates the number of bytes of the subsequent data. Further, 1-bit flag information of "cropping_normal_interpretation_flag" described above is described in this descriptor.

A process of the transmission data generation unit 110 illustrated in Fig. 6 will be described in brief. The image data (the 2-dimensional image data or the stereoscopic image data) of the programs which are sequentially output from the data extraction unit 111 and which are to be transmitted are supplied to the video encoder 112. The video encoder 112 performs encoding of H.264/AVC (Advanced Video Coding) on the image data to obtain encoded video data. In the video encoder 112, the stream formatter (not illustrated) provided on a rear stage generates a video stream (video elementary stream) including the encoded video data.

In this case, the video encoder 112 inserts the cropping information into the header portion of the video data stream. That is, in this case, the cropping information is inserted into a portion of the SPS (Sequence Parameter Set) present in the head access unit of the GOP (see Figs. 2 and 3). When the image data is the stereoscopic image data, the video encoder 112 inserts "Frame Packing Arrangement SEI message" into a portion of the SEIs of the access unit (see Fig. 2). The SEI includes type information indicating which transmission format of the stereoscopic image data the image data has.

When the image data of the above-described programs to be transmitted is output from the data extraction unit 111, audio data corresponding to the image data is also output from the data extraction unit 111. The audio data is supplied to the audio encoder 113. The audio encoder 113 performs encoding of MPEG-2Audio AAC or the like on the audio data to generate an audio stream (audio elementary stream) including the encoded audio data.

The video stream generated by the video encoder 112 is supplied to the multiplexer 114. The audio stream generated by the audio encoder 113 is also supplied to the multiplexer 114. The multiplexer 114 packets and multiplexes the elementary stream supplied from each encoder to generate a transport stream (multiplexed data stream) TS.

In this case, the multiplexer 114 inserts the interpretation information of the parameter value of the cropping information into a high-order layer of the video data stream. In this case, the interpretation information corresponding to the switched image data is inserted at a timing prior to the switching timing of the 2-dimensional image data and the stereoscopic image data. In this case, the flag information of "cropping_normal_interpretation_flag" serving as the interpretation information is described in, for example, the descriptor inserted under the video elementary loop of the program map table (see Figs. 7, 8, 9, and 11).

As described above, the transmission data generation unit 110 illustrated in Fig. 6 inserts the interpretation information of the parameter value of the cropping information into a high-order layer of the video stream. Therefore, even when the image data is any one of the 2-dimensional image data and the stereoscopic image data, the reception side can appropriately interpret the parameter value of the cropping information based on the interpretation information, and thus can appropriately perform the cutout process (cropping) based on the cropping information to correctly generate the display image data.

The transmission data generation unit 110 illustrated in Fig. 6 inserts the interpretation information corresponding to the switched image data into a high-order layer of the video stream at a timing prior to the switching timing of the 2-dimensional image data and the stereoscopic image data. Therefore, the reception side can acquire the interpretation information changed according to the switched image data before the switching timing of the 2-dimensional image data and the stereoscopic image data. Accordingly, since the image data cutout process (cropping) can be performed by the interpretation of the parameter value of the cropping information suitable for the switched image data immediately from the switching timing, it is possible to prevent unnatural image display by the switching of the image data.

### [Example of Configuration of Receiver]

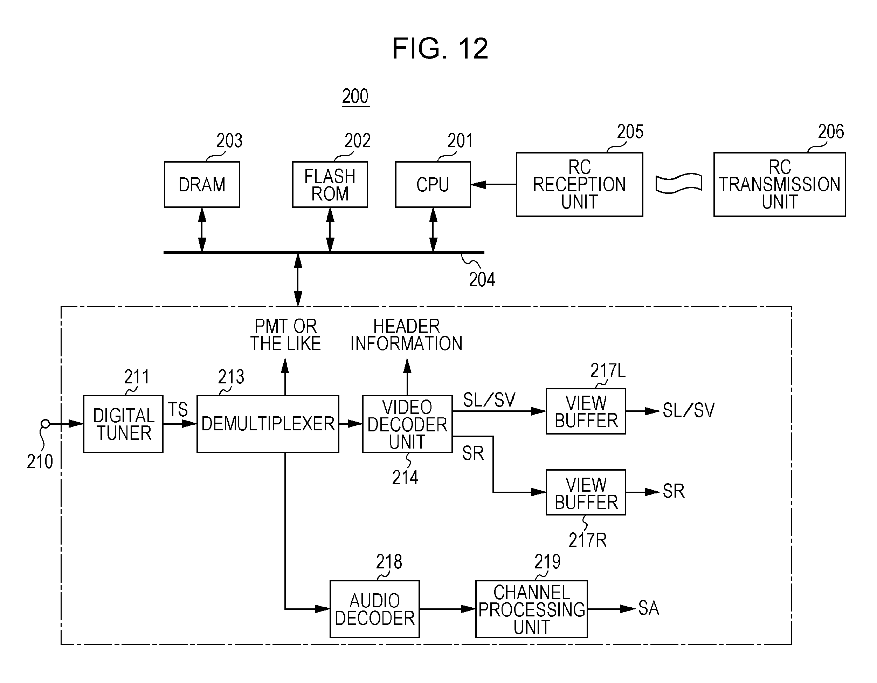

Fig. 12 is a diagram illustrating an example of the configuration of the receiver (3D TV) 200. The receiver 200 includes a CPU 201, a flash ROM 202, a DRAM 203, an internal bus 204, a remote control reception unit (RC reception unit) 205, and a remote control transmission unit (RC transmission unit) 206.

The receiver 200 further includes an antenna terminal 210, a digital tuner 211, a demultiplexer 213, a video decoder 214, view buffer 217L and 217R, an audio decoder 218, and a channel processing unit 219.

The CPU 201 controls a process of each unit of the receiver 200. The flash ROM 202 stores control software and stores data. The DRAM 203 includes a work area of the CPU 201. The CPU 201 loads software or data read from the flash ROM 202 on the DRAM 203, activates the software, and controls each unit of the receiver 200. The RC reception unit 205 receives a remote control signal (remote control code) transmitted from the RC transmission unit 206 and supplies the remote control code to the CPU 201. The CPU 201 controls each unit of the receiver 200 based on the remote control code. The CPU 201, the flash ROM 202, and the DRAM 203 are connected to the internal bus 204.

The antenna terminal 210 is a terminal that inputs a television broadcast signal received by a reception antenna (not illustrated). The digital tuner 211 processes the television broadcast signal input to the antenna terminal 210 and outputs a predetermined transport stream TS corresponding to a user's selected channel.

As described above, the transport stream TS has a video stream including the image data, and the cropping information is inserted into the header portion. Here, the image data is 2-dimensional image data or stereoscopic image data. In the transport stream TS, as described above, the flag information of "cropping_normal_interpretation_flag" serving as the interpretation information of the parameter value of the cropping information is inserted into the high-order layer of the video stream.

As described above, for example, the interpretation information is described in the descriptor inserted under the program map table or an event information table. The descriptor is, for example, a known AVC video descriptor or a newly defined cropping interpretation descriptor. In this case, at a timing prior to the switching timing of the 2-dimensional image data and the stereoscopic image data, the interpretation information corresponding to the switched image data is inserted into the high-order layer of the video stream.

The demultiplexer 213 extracts each stream of the video and the audio from the transport stream TS output from the digital tuner 211. The demultiplexer 213 extracts information such as the program map table (PMT) from the transport stream TS and supplies this information to the CPU 201.

As described above, this information includes the flag information of "cropping_normal_interpretation_flag" serving as the interpretation information of the parameter value of the cropping information. The CPU 201 interprets the parameter value of the cropping information based on the flag information and controls the image data cutout process (cropping) on the decoded image data.

The video decoder 214 performs an inverse process to the process of the video encoder 112 of the transmission data generation unit 110 described above. That is, the video decoder 214 performs a decoding process on the encoded image data included in the video stream extracted by the demultiplexer 213 to obtain the decoded image data.

As described above, the transmission data generation unit 110 of the broadcast station 100 adds 8 lines formed from blank data in order to perform the encoding for each block of 16 × 16 and performs the encoding to obtain the image data of 1920 pixels × 1088 lines. Therefore, the video decoder 214 acquires, as the decoded image data, the image data of 1920 pixels × 1088 lines to which the 8 lines formed from the blank data are added.

The video decoder 214 extracts header information of the video data stream and supplies the header information to the CPU 201. In this case, a portion of the SPS of the head access unit of the GOP includes the cropping information. When the image data is the stereoscopic image data, "Frame Packing Arrangement SEI message" including the type information is inserted into a portion of the SEIs of the access unit. The CPU 201 controls the image data cutout process (cropping) on the decoded image data based on the cropping information and the SEI.

The video decoder 214 performs the image data cutout process (cropping) on the decoded image data under the control of the CPU 201 and appropriately performs the scaling process to generate display image data.

The video decoder 214 performs the following process, when the image data is 2-dimensional image data. That is, the video decoder 214 cuts out the image data of 1920 pixels × 1080 lines including the actual image data from the decoded image data of 1920 pixels × 1088 lines and generates image data SV for 2-dimensional image display.

The video decoder 214 performs the following process, when the image data is stereoscopic image data and is in the 2-dimensional display mode. That is, the video decoder 214 cuts out left-eye image data or right-eye image data from the decoded image data of 1920 pixels × 1088 lines in the image data of 1920 pixels × 1080 lines including the actual image data. Then, the video decoder 214 performs the scaling process on the cut image data to generate image data SV for 2-dimensional image display (see the 2D display mode in Figs. 4 and 5).

The video decoder 214 performs the following process, when the image data is stereoscopic image data and is in the stereoscopic display mode. That is, the video decoder 214 cuts out the image data of 1920 pixels × 1080 lines including the actual image data from the decoded image data of 1920 pixels × 1088 lines.

The video decoder 214 halves the cut image data into left and right image data or top and bottom image data and performs the scaling process on each of the image data to generate left-eye image data SL and right-eye image data SR for stereoscopic image display (see the 3D display mode in Figs. 4 and 5). In this case, when the image data is the stereoscopic image data of the side by side scheme, the image data is halved into the left and right image data. When the image data is the stereoscopic image data of the top and bottom scheme, the image data is halved into the top and bottom image data.

The view buffer 217L temporarily accumulates the 2-dimensional image data SV or the left-eye image data SL of 1920 pixels × 1080 lines generated by the video decoder 214 and outputs the 2-dimensional image data SV or the left-eye image data SL to an image output unit such as a display. Further, the view buffer 217R temporarily accumulates the right-eye image data SR of 1920 pixels × 1080 lines generated by the video decoder 214 and outputs the right-eye image data SR to the image output unit such as a display.

The audio decoder 218 performs an inverse process to the process of the audio encoder 113 of the transmission data generation unit 110 described above. That is, the audio decoder 218 performs a decoding process on the encoded audio data included in the audio stream extracted by the demultiplexer 213 to obtain decoded audio data. The channel processing unit 219 processes the audio data obtained from the audio decoder 218 to generate audio data SA of each channel used to realize, for example, a 5.1 ch surround and outputs the audio data SA to an audio output unit such as a speaker.

### [Cropping Control]

Control of the cropping (image data cutout process) performed in the video decoder 214 by the CPU 201 will be described. The CPU 201 performs the cropping control in the video decoder 214 based on the cropping information, the interpretation information of the parameter value, the SEI including the type information of the stereoscopic image data, and the like.

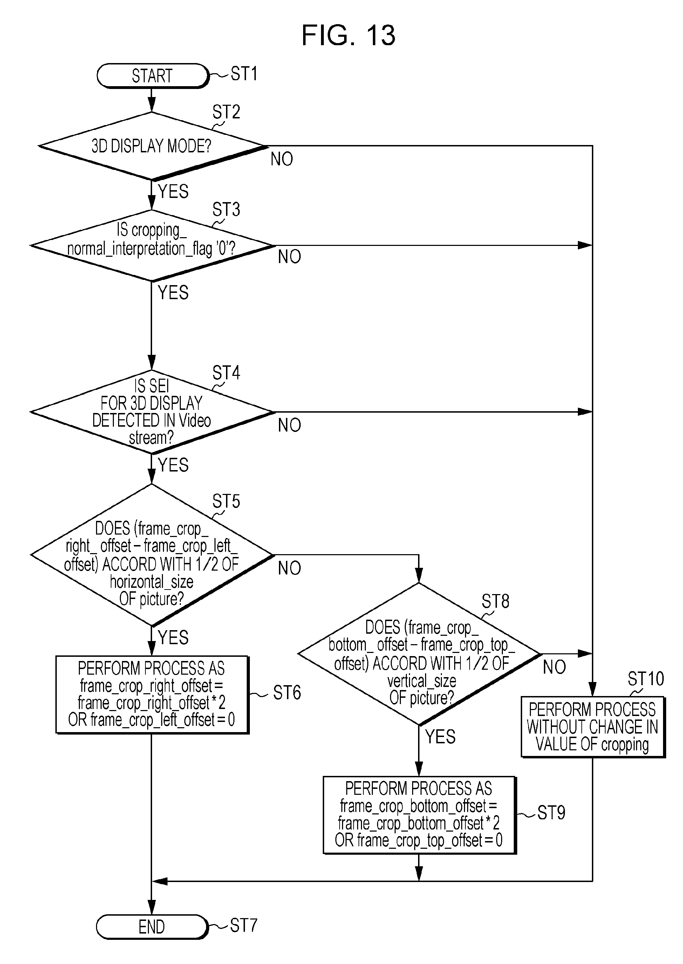

Fig. 13 is a flowchart illustrating an example of a cropping control process performed by the CPU 201. The CPU 201 performs a process of the flowchart for each picture. The CPU 201 starts the process in step ST1, and then causes the process to proceed to step ST2. In step ST2, the CPU 201 determines whether a mode is the 3D display mode. The user operates the RC transmission unit 206 to set the 3D display mode or the 2D display mode.

When the mode is the 3D display mode, in step ST3, the CPU 201 determines whether "cropping_normal_interpretation_flag" which is the interpretation information of the parameter value of the cropping information is "0." This flag information is set to "0," when the image data is the stereoscopic image data and is for a 3D service in consideration of 2D compatibility.

When the flag information is "0," in step ST4, the CPU 201 determines whether the SEI of "Frame Packing Arrangement SEI message" is detected. The SEI is present, when the image data is the stereoscopic image data. When the SEI is detected, in step ST5, the CPU 201 determines whether (frame_crop_right_offset - frame_crop_left_offset) accords with 1/2 of the size (horizontal_size) of the picture in the horizontal direction.

When the image data is the stereoscopic image data of the side by side scheme, the condition of step ST5 is satisfied. Therefore, when the condition of step ST5 is satisfied, the CPU 201 causes the process to proceed to step ST6. In step ST6, the CPU 201 interprets the cropping information and performs a cropping control process such that the cropping region is doubled in the horizontal direction.

In this case, the CPU 201 changes the parameter value of the cropping information as follows depending on whether the region cut out based on the original cropping information is the left half or the right half. That is, when the region is the left half, the interpretation is performed as "frame_crop_right_offset = frame_crop_right_offset * 2" by substituting the right-hand side into the left-hand side, and then the cropping control process is performed. Conversely, when the region is the right half, the interpretation is performed as "frame_crop_left_offset = 0" by substituting the right-hand side into the left-hand side, and then the cropping control process is performed.

The CPU 201 performs the process of step ST6, and then ends the process in step ST7.

Conversely, when the condition of step ST5 is not satisfied, the CPU 201 causes the process to proceed to step ST8. In step ST8, the CPU 201 determines whether (frame_crop_bottom_offset - frame_crop_top_offset) accords with 1/2 of the size (vertical_size) of the picture in the vertical direction.

When the image data is the stereoscopic image data of the top and bottom scheme, the condition of step ST8 is satisfied. Therefore, when the condition of step ST8 is satisfied, the CPU 201 causes the process to proceed to step ST9. In step ST9, the CPU 201 interprets the cropping information such that the cropping region is doubled in the vertical direction and performs the cropping control process.

In this case, the CPU 201 changes the parameter value of the cropping information as follows depending on whether the region cut out based on the original cropping information is the top half or the bottom half. That is, when the region is the top half, the interpretation is performed as "frame_crop_bottom_offset = frame_crop_bottom_offset * 2" by substituting the right-hand side into the left-hand side, and then the cropping control process is performed. Conversely, when the region is the bottom half, the interpretation is performed as "frame_crop_top_offset = 0" by substituting the right-hand side into the left-hand side, and then the cropping control process is performed.

The CPU 201 performs the process of step ST9, and then ends the process in step ST7. Whether the format of the corresponding picture is the side by side scheme or the top and bottom scheme is, of course, known by "Frame Packing Arrangement SEI."

When the mode is not the 3D display mode in step ST2, the flag information is "1" in step ST3, the SEI is not detected in step ST4, and the condition of step ST8 is not satisfied, the CPU 201 causes the process to proceed to step ST10. In step ST10, the CPU 201 performs the cropping control process without change of the parameter value of the cropping information. The CPU 201 performs the process of step ST10, and then ends the process in step ST7.

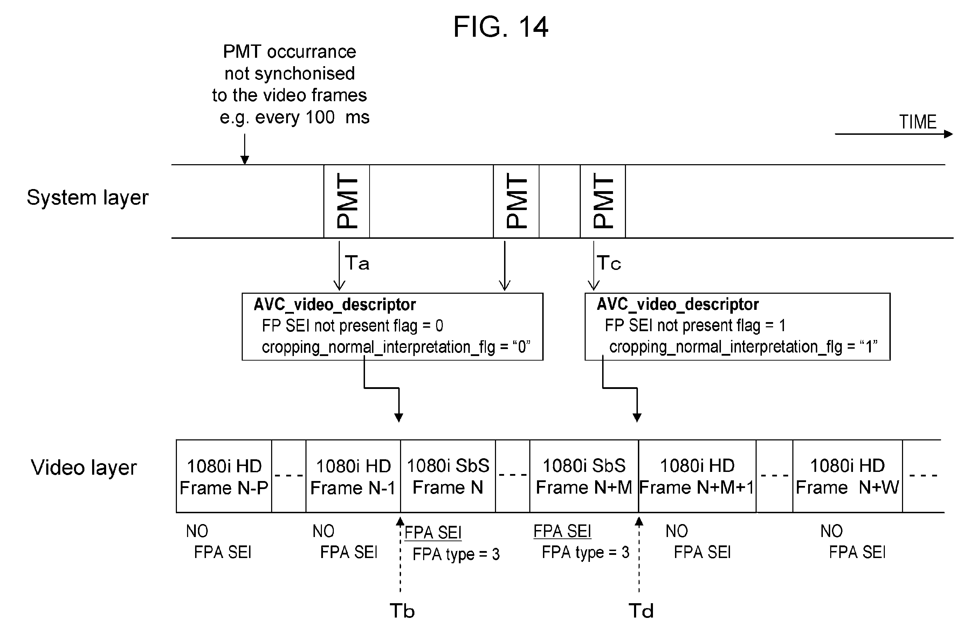

Fig. 14 is a diagram illustrating an example of the flag information of "cropping_normal_interpretation_flag" described in the AVC video descriptor (AVC_video_descriptor) under the PMT inserted into a system layer at the time of an operation. In MPEG, the maximum insertion cycle of the PMT is 100 msec. Therefore, the insertion timing of the PMT does not necessarily accord with a timing of a frame of a video. Hereinafter, the description will be made on the assumption that the mode is the 3D display mode.

In the illustrated example, the image data is switched from the 2-dimensional image data to the stereoscopic image data at a timing Tb. The AVC video descriptor in which the flag information of "cropping_normal_interpretation_flag" corresponding to the switched image data is described is acquired at a timing Ta prior to the timing Tb.

Since the switched image data is the stereoscopic image data, "Frame_Packing_SEI_not_present_flag = 0" and "cropping_normal_interpretation_flag = 0" is set in the AVC video descriptor (AVC_video_descriptor). However, the image data is the 2-dimensional image data up to the timing Tb and the SEI of the "Frame Packing Arrangement SEI message" is not detected.

That is, even when the flag information of "cropping_normal_interpretation_flag = 0" is acquired, the CPU 201 does not specially interpret the parameter value of the cropping information up to the timing Tb, interprets the parameter value without change, and performs the cropping control process. Therefore, the video decoder 214 correctly generates the image data SV for the 2-dimensional image display up to the timing Tb.

At the timing Tb, the SEI of "Frame Packing Arrangement SEI message" is detected. In the illustrated example, the type information of the stereoscopic image data included in the SEI is set to "3" and the image data is known to be the stereoscopic image data of the side by side scheme. The CPU 201 specially interprets the parameter value of the cropping information from the timing Tb and performs the cropping control process. Therefore, the video decoder 214 correctly generates the image data SL and the image data SR for the stereoscopic image display from the timing Tb.

Likewise, in the illustrated example, the image data is switched from the stereoscopic image data to the 2-dimensional image data at a timing Td. The AVC video descriptor in which the flag information of "cropping_normal_interpretation_flag" corresponding to the switched image data is described is acquired at a timing Tc prior to the timing Td.

Since the switched image data is the 2-dimensional image data, "Frame_Packing_SEI_not_present_flag = 1" and "cropping_normal_interpretation_flag = 1" is set in the AVC video descriptor (AVC_video_descriptor). However, the image data is the stereoscopic image data up to the timing Td and the SEI of the "Frame Packing Arrangement SEI message" is detected.

That is, even when the flag information of "cropping_normal_interpretation_flag = 1" is acquired, the CPU 201 continues to specially interpret the parameter value of the cropping information up to the timing Td and performs the cropping control process. Therefore, the video decoder 214 correctly generates the image data SL and the image data SR for the stereoscopic image display up to the timing Td. This can be realized by storing "cropping_normal_interpretation_flag = 0" in the receiver in the previous state.

On the other hand, in Fig. 14, in order to perform correct display even when the channel is switched at the timing Td, a display range can be determined by normally setting "cropping_normal_interpretation_flag" to "0" and causing the receiver side to interpret the parameter value of the cropping information.

When the image data is the stereoscopic image data of the side by side scheme, the receiver side performs the interpretation as follows. That is, when the cutout region can be determined to be the left half, the interpretation is performed as "frame_crop_right_offset = frame_crop_right_offset * 2" by substituting the right-hand side into the left-hand side. Further, when the cutout region can be determined to be the right half, the interpretation is performed as "frame_crop_left_offset = 0" by substituting the right-hand side into the left-hand side.

When the image data is the stereoscopic image data of the top and bottom scheme, the receiver side performs the interpretation as follows. That is, when the cutout region can be determined to be top half, the interpretation is performed as "frame_crop_bottom_offset = frame_crop_bottom_offset * 2" by substituting the right-hand side into the left-hand side. Further, when the cutout region can be determined to be the bottom half, the interpretation is performed as "frame_crop_top_offset = 0" by substituting the right-hand side into the left-hand side.

Alternatively, when the interpretation of the parameter value of the cropping information is set for each event, the realization can be made by the above-described arrangement, as in Fig. 8(b), that is, the insertion of "Cropping_interpretation_descriptor" under the EIT.

At the timing Td, the SEI of "Frame Packing Arrangement SEI message" is not detected. The CPU 201 interprets the parameter value of the cropping information without change from the timing Td and performs the cropping control process. Therefore, the video decoder 214 correctly generates the image data SV for 2-dimensional image display from the timing Td.

A process of the receiver 200 will be described in brief. A television broadcast signal input to the antenna terminal 210 is supplied to the digital tuner 211. The digital tuner 211 processes the television broadcast signal and outputs a predetermined transport stream TS corresponding to the user's selected channel.

The demultiplexer 213 extracts each elementary stream of an audio and a video from the transport stream TS obtained from the digital tuner 211. The demultiplexer 213 extracts information such as the program map table (PMT) from the transport stream TS and supplies this information to the CPU 201. This information includes the flag information of "cropping_normal_interpretation_flag" serving as the interpretation information of the parameter value of the cropping information.

The video stream extracted from the demultiplexer 213 is supplied to the video decoder 214. The video decoder 214 can obtain decoded image data (2-dimensional image data or stereoscopic image data) obtained by performing the decoding process on the encoded image data included in the video stream. The image data is image data of 1920 pixels × 1088 lines to which 8 lines formed from blank data are added. The video decoder 214 extracts the header information of the video data stream and supplies the header information to the CPU 201. The header information includes the cropping information or the SEI of "Frame Packing Arrangement SEI message."

The CPU 201 controls the cropping of the video decoder 214 based on the cropping information, the interpretation information of the parameter value, the SEI including the type information of the stereoscopic image data, and the like. In this case, the CPU 201 interprets the parameter value of the cropping information without change, when the image data is the 2-dimensional image data.

The CPU 201 interprets the parameter value of the cropping information without change in the 2D display mode, when the image data is the stereoscopic image data. Further, the CPU 201 interprets the cropping information such that the cropping region is doubled in the horizontal direction or the vertical direction in the 3D display mode, when the image data is the stereoscopic image data.

The video decoder 214 performs the image data cutout process (cropping) on the decoded image data based on the interpreted cropping information under the control of the CPU 201. Further, the video decoder 214 appropriately performs the scaling process on the cut image data to generate the display image data.

Here, the video decoder 214 performs the following process, when the image data is the 2-dimensional image data. That is, the video decoder 214 cuts out the image data of 1920 pixels × 1080 lines including the actual image data from the decoded image data of 1920 pixels × 1088 lines and generates the image data SV for 2-dimensional image display.

The video decoder 214 performs the following process, when the image data is stereoscopic image data and is in the 2-dimensional display mode. That is, the video decoder 214 cuts out left-eye image data or right-eye image data from the decoded image data of 1920 pixels × 1088 lines in the image data of 1920 pixels × 1080 lines including the actual image data. Then, the video decoder 214 performs the scaling process on the cut image data to generate image data SV for 2-dimensional image display.

The video decoder 214 performs the following process, when the image data is stereoscopic image data and is in the stereoscopic display mode. That is, the video decoder 214 cuts out the image data of 1920 pixels × 1080 lines including the actual image data from the decoded image data of 1920 pixels × 1088 lines. The video decoder 214 halves the cut image data into left and right image data or top and bottom image data and performs the scaling process on each of the image data to generate the left-eye image data SL and the right-eye image data SR for stereoscopic image display.

The image data SV for two-dimensional image display generated by the video decoder 214 and the left-eye image data SL for the stereoscopic image display are output to the image output unit such as a display via the view buffer 217L. Further, the right-eye image data SR for stereoscopic image display generated by the video decoder 214 is output to the image output unit such as a display via the view buffer 217R.

The audio stream extracted by the demultiplexer 213 is supplied to the audio decoder 218. The audio decoder 218 performs the decoding process on the encoded audio data included in the audio stream to obtain decoded audio data. The audio data is supplied to the channel processing unit 219. The channel processing unit 219 processes the audio data to generate audio data SA of each channel used to realize, for example, a 5.1 ch surround. The audio data SA is output to an audio output unit such as a speaker.

As described above, the CPU 201 of the receiver 200 illustrated in Fig. 12 appropriately interprets the cropping information inserted into the header portion of the video stream based on the interpretation information of the parameter value of the cropping information inserted into the high-order layer of the video stream. Then, based on the interpretation result, the CPU 201 controls the image data cutout process (cropping) performed by the video decoder 214. Accordingly, even when the image data is any one of the 2-dimensional image data and the stereoscopic image data, the video decoder 214 can appropriately perform the image data cutout process, and thus can correctly generate the display image data.

In the receiver 200 illustrated in Fig. 12, the CPU 201 acquires the interpretation information changed according to the switched image data before the switching timing of the image data. However, the interpretation of the parameter value of the cropping information based on the interpretation information is reflected immediately after the image data is actually switched. Accordingly, the image data cutout process can appropriately be performed by the interpretation of the parameter value of the cropping information suitable for the switched image data immediately from the switching timing. Further, even when the acquisition of the interpretation information is not synchronized with the switching timing of the image data, it is possible to prevent an unnatural image from being displayed.

Here, a case will be described in which the transport stream Ts from the broadcast station 100 in the image transmission and reception system 10 illustrated in Fig. 1 is received by a legacy 2D receiver (2D TV). In this case, the legacy 2D receiver skips the interpretation information of the parameter value of the cropping information inserted into the high-order layer of the video stream. Therefore, the interpretation information rarely affects the cropping process in the 2D receiver.

### <2. Modification Examples>

In the above-described embodiment, the example has been described in which the flag information of "cropping_normal_interpretation_flag" is described as the interpretation information in the descriptor inserted under the video elementary loop of the program map table. Instead of the flag information, mode information of "cropping_interpretation_mode" to be described in detail below can be considered to be described as interpretation information in the descriptor.

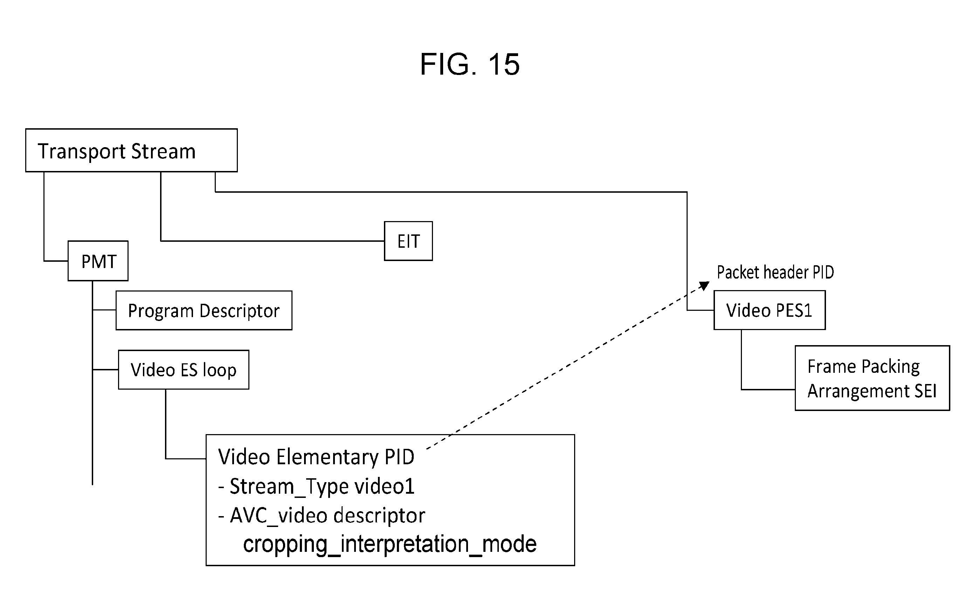

Fig. 15 is a diagram illustrating an example of the configuration of a transport stream TS. The example of the configuration is an example in which the mode information of "cropping_interpretation_mode" is described as the interpretation information of the parameter value of the cropping information in a known AVC video descriptor.

In the example of the configuration, a PES packet "Video PES" of a video stream is included. In the video stream, when the included image data is stereoscopic image data, as described above, "Frame Packing Arrangement SEI message" is inserted into a portion of the SEIs of the access unit. The SEI includes type information indicating which transmission format of stereoscopic image data the image data has.

The transport stream TS includes a PMT (Program Map Table) as PSI (Program Specific Information). The PSI is information that describes to which program each elementary stream included in the transport stream belongs. The transport stream also includes an EIT (Event Information Table) as SI (Serviced Information) used to manage an event unit.

A program descriptor describing information regarding the entire program is present in the PMT. Further, an elementary loop having information regarding each elementary stream is present in the PMT. In the example of the configuration, a video elementary loop (Video ES loop) is present.

In the elementary loop, information such as a packet identifier (PID) is arranged for each stream and a descriptor describing information regarding the elementary stream is also arranged. In the example of the configuration, an audio is not illustrated to simplify the drawing.

In the example of the configuration, mode information of "cropping_interpretation_mode" is described in "AVC_video_descriptor" included in the video elementary loop (Video ES loop).

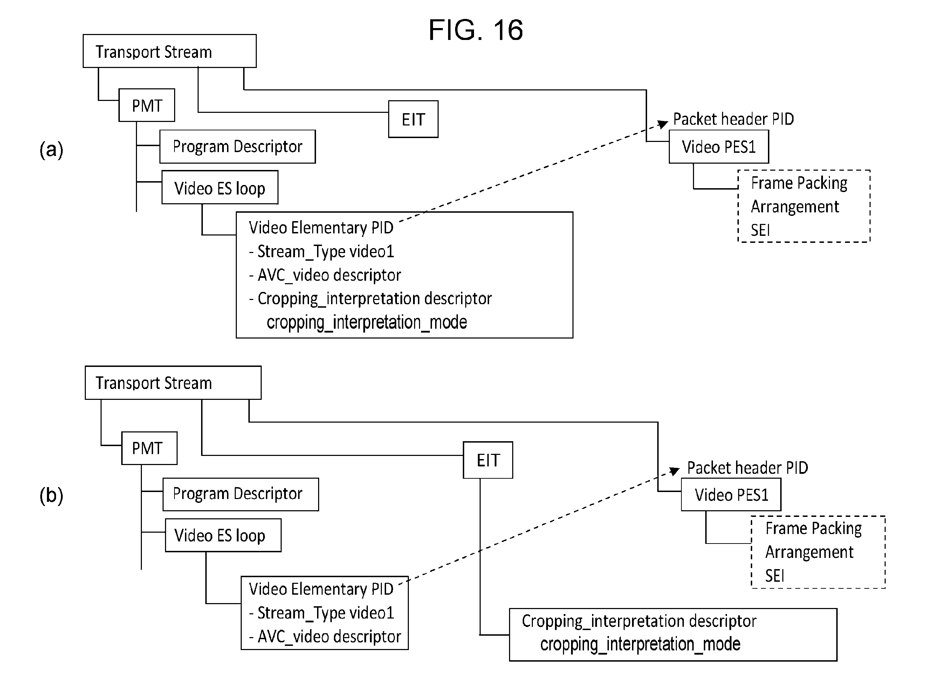

Fig. 16(a) is a diagram illustrating an example of another configuration of the transport stream TS. The example of the configuration is an example in which mode information of "cropping_interpretation_mode" serving as the interpretation information of the parameter value of the cropping information is described in a newly defined cropping interpretation descriptor.

In the example of the configuration, mode information of "cropping_interpretation_mode" is described in "Cropping_interpretation_descriptor" inserted into the video elementary loop (Video ES loop). Although the detailed description is omitted, the remaining configuration is the same as the example of the configuration illustrated in Fig. 15.

When the interpretation of the parameter value of the cropping information is changed at each event, "Cropping_interpretation_descriptor" can be considered to be inserted under the EIT, as illustrated in Fig. 16(b).

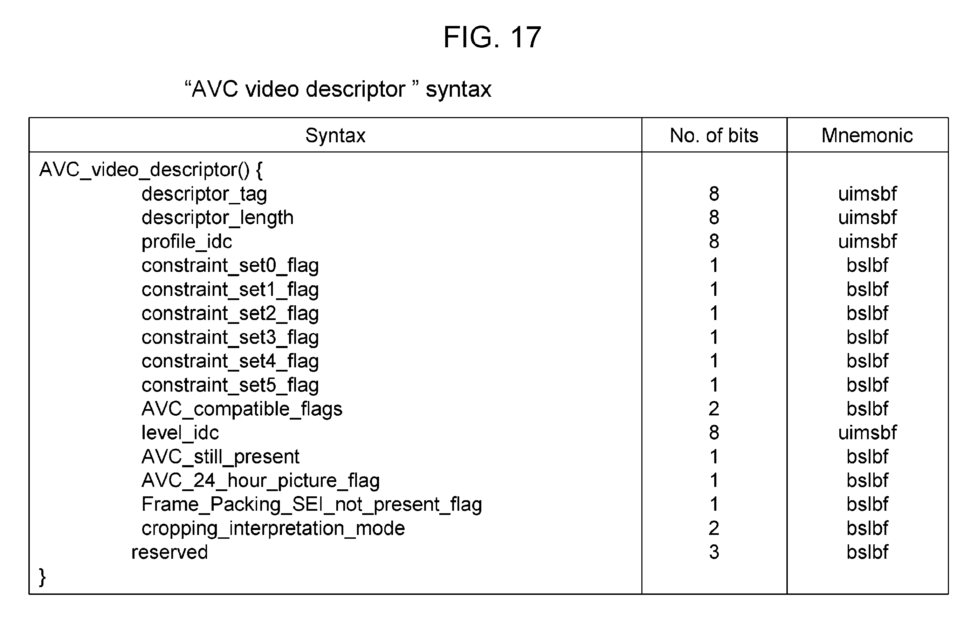

Fig. 17 is a diagram illustrating an example of the structure (Syntax) of "AVC_video_descriptor." The descriptor itself already satisfies the H.264/AVC standard. Here, 2-bit mode information of "cropping_interpretation_mode" is newly defined in the descriptor.

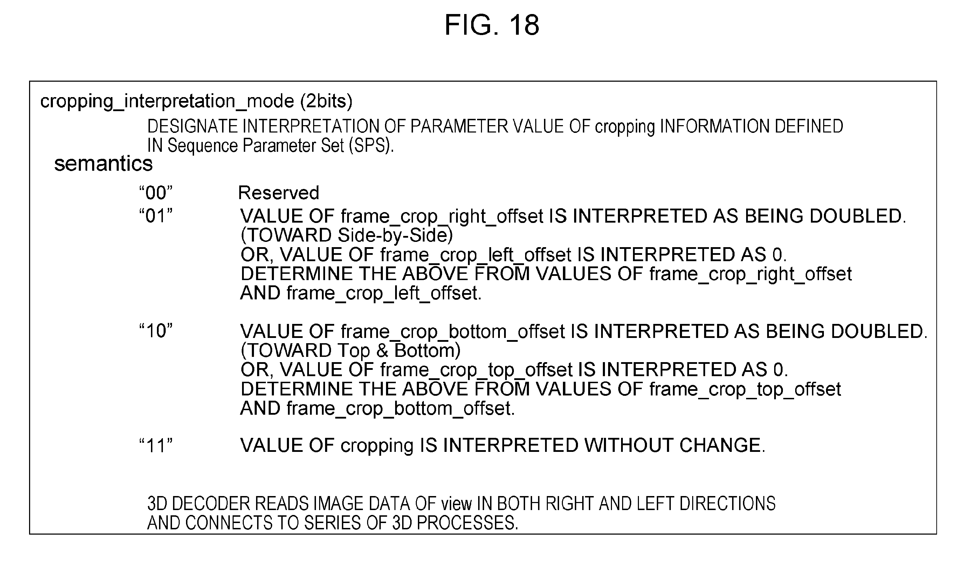

As indicated in the regulation contents (semantics) in Fig. 18, the mode information designates interpretation of the parameter value of the cropping information defined in the SPS (Sequence Parameter Set) in the head access unit of the GOP. When the mode information is 01," the mode information indicates that the value of frame_crop_right_offset is interpreted as being doubled. This is designed for the stereoscopic image data of the side by side scheme. When the mode information is "10," the mode information designates that the value of frame_crop_bottom_offset is interpreted as being doubled. This is designed for the stereoscopic image data of the top and bottom scheme. When the mode information is "11," the mode information designates the interpretation in which the parameter value of the cropping information is interpreted without change.

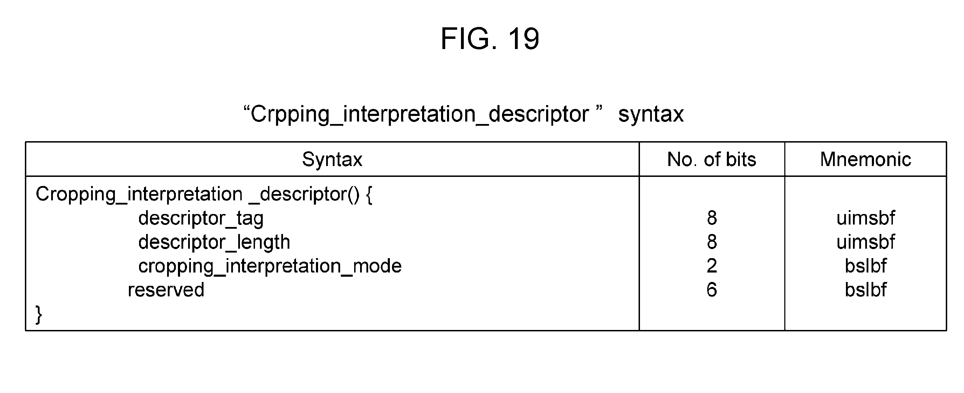

Fig. 19 is a diagram illustrating an example of the configuration (Syntax) of "Cropping_interpretation_descriptor." An 8-bit field of "descriptor_tag" indicates that the descriptor is "Cropping_interpretation_descriptor." An 8-bit field of "descriptor_length" indicates the number of bytes of subsequent data. Further, 2-bit mode information of "cropping_interpretation_mode" described above is described in the descriptor.

The video decoder 214 of the receiver 200 performs the same process under the control of the CPU 201, even when the mode information of "cropping_interpretation_mode" is used instead of the flag information of "cropping_normal_interpretation_flag."

That is, the video decoder 214 performs the following process, when the image data is 2-dimensional image data. That is, the video decoder 214 cuts out the image data of 1920 pixels × 1080 lines including the actual image data from the decoded image data of 1920 pixels × 1088 lines to generate the image data SV for 2-dimensional image display.

The video decoder 214 performs the following process, when the image data is stereoscopic image data and is in the 2-dimensional display mode. That is, the video decoder 214 cuts out left-eye image data or right-eye image data from the decoded image data of 1920 pixels × 1088 lines in the image data of 1920 pixels × 1080 lines including the actual image data. Then, the video decoder 214 performs the scaling process on the cut image data to generate image data SV for 2-dimensional image display.

The video decoder 214 performs the following process, when the image data is stereoscopic image data and is in the stereoscopic display mode. That is, the video decoder 214 cuts out the image data of 1920 pixels × 1080 lines including the actual image data from the decoded image data of 1920 pixels × 1088 lines. The video decoder 214 halves the cut image data into left and right image data or top and bottom image data and performs the scaling process on each of the image data to generate left-eye image data SL and right-eye image data SR for stereoscopic image display.

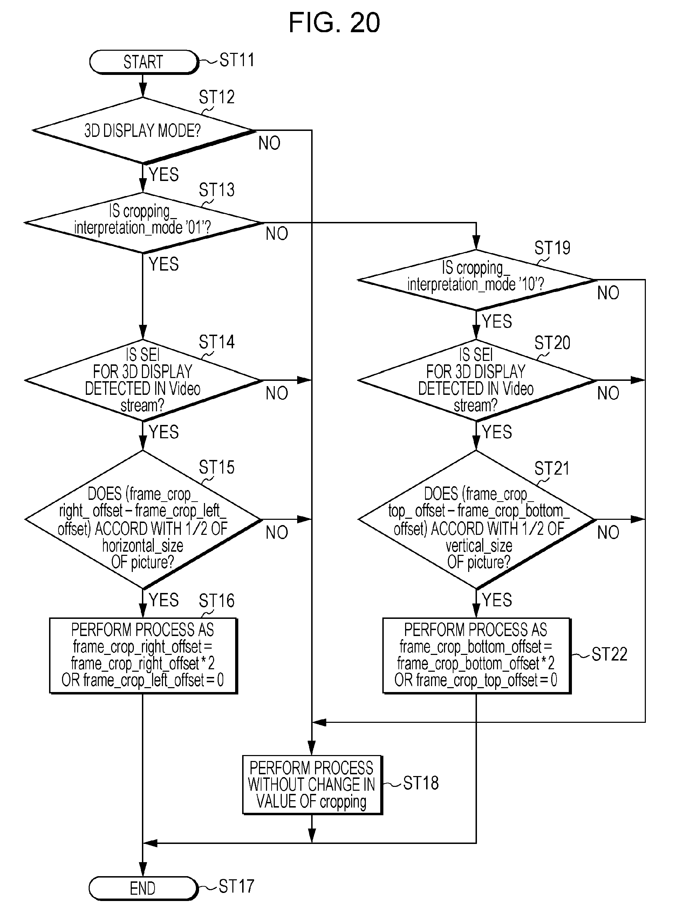

Fig. 20 is a flowchart illustrating an example of a cropping control process of the CPU 201 when the mode information of "cropping_interpretation_mode" is used. The CPU 201 performs a process of the flowchart for each picture. The CPU 201 starts the process in step ST11, and then causes the process to proceed to step ST12. In step ST12, the CPU 201 determines whether a mode is the 3D display mode. The user operates the RC transmission unit 206 to set the 3D display mode or the 2D display mode.

When the mode is the 3D display mode, in step ST13, the CPU 201 determines whether the mode information of "cropping_interpretation_mode" is "01." When the mode information is "01," in step ST14, the CPU 201 determines whether the SEI of "Frame Packing Arrangement SEI message" is detected. The SEI is present, when the image data is the stereoscopic image data. When the SEI is detected, in step ST15, the CPU 201 determines whether (frame_crop_right_offset - frame_crop_left_offset) accords with 1/2 of the size (horizontal_size) of the picture in the horizontal direction.

When the image data is the stereoscopic image data of the side by side scheme, the condition of step ST15 is satisfied. Therefore, when the condition of step ST15 is satisfied, the CPU 201 causes the process to proceed to step ST16. In step ST16, the CPU 201 interprets the cropping information and performs a cropping control process such that the cropping region is doubled in the horizontal direction.

In this case, the CPU 201 changes the parameter value of the cropping information as follows depending on whether the region cut out based on the original cropping information is the left half or the right half. That is, when the region is the left half, the cropping control process is performed as "frame_crop_right_offset = frame_crop_right_offset * 2". Conversely, when the region is the right half, the cropping control process is performed as "frame_crop_left_offset = 0".

The CPU 201 performs the process of step ST16, and then ends the process in step ST17.

When the mode is not the 3D display mode in step ST12, the SEI is not detected in step ST14, and the condition of step ST15 is not satisfied, the CPU 201 causes the process to proceed to step ST18. In step ST18, the CPU 201 performs the cropping control process without change of the parameter value of the cropping information. The CPU 201 performs the process of step ST18, and then ends the process in step ST17.

When the mode information is not "01" in step ST13, the CPU 201 causes the process to proceed to step ST19. In step ST19, the CPU 201 determines whether the mode information of "cropping_interpretation_mode" is "10." When the mode information is "10," in step ST20, the CPU 201 determines whether the SEI of "Frame Packing Arrangement SEI message" is detected.

The SEI is present, when the image data is stereoscopic image data. When the SEI is detected, in step ST21, the CPU 201 determines whether (frame_crop_bottom_offset - frame_crop_top_offset) accords with 1/2 of the size (vertical_size) of the picture in the vertical direction.

When the image data is the stereoscopic image data of the top and bottom scheme, the condition of step ST21 is satisfied. Therefore, when the condition of step ST21 is satisfied, the CPU 201 causes the process to proceed to step ST22. In step ST22, the CPU 201 interprets the cropping information such that the cropping region is doubled in the vertical direction and performs the cropping control process.

In this case, the CPU 201 changes the parameter value of the cropping information as follows depending on whether the region cut out based on the original cropping information is the top half or the bottom half. That is, when the region is the top half, the cropping control process is performed as "frame_crop_bottom_offset = frame_crop_bottom_offset * 2". Conversely, when the region is the bottom half, the cropping control process is performed as "frame_crop_top_offset = 0".

The CPU 201 performs the process of step ST22, and then ends the process in step ST17.

When the mode information is not "10" in step ST19, the SEI is not detected in step ST20, and the condition of step ST21 is not satisfied, the CPU 201 causes the process to proceed to step ST18. In step ST18, the CPU 201 performs the cropping control process without change of the parameter value of the cropping information. The CPU 201 performs the process of step ST18, and then ends the process in step ST17.

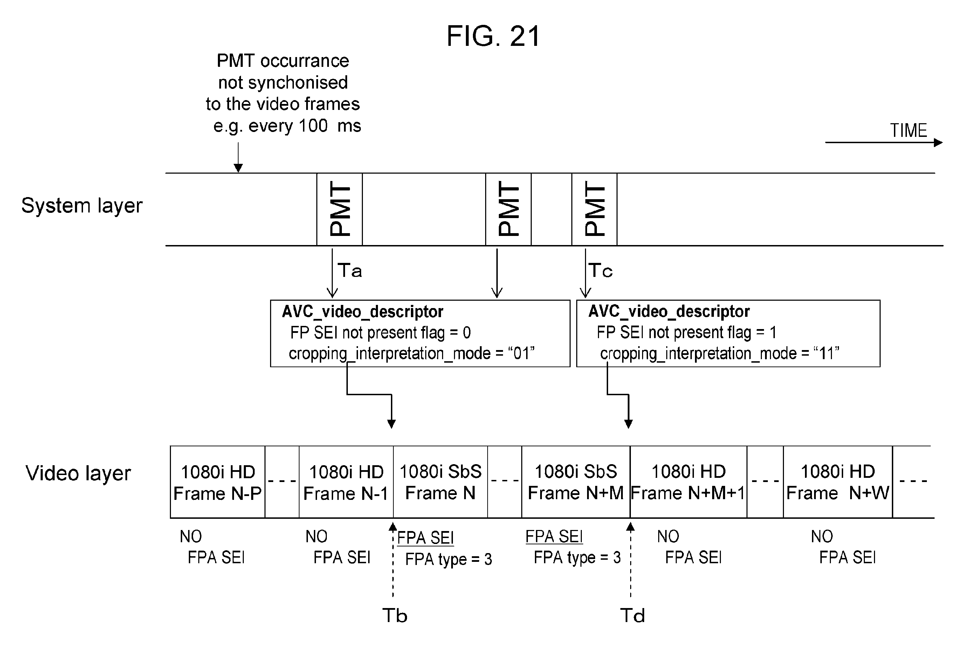

Fig. 21 is a diagram illustrating an example of the mode information of "cropping_interpretation_mode" described in the AVC video descriptor (AVC_video_descriptor) under the PMT inserted into a system layer at the time of an operation. In MPEG, the maximum insertion cycle of the PMT is 100 msec. Therefore, the insertion timing of the PMT does not necessarily accord with a timing of a frame of a video. Hereinafter, the description will be made on the assumption that the mode is the 3D display mode.

In the illustrated example, the image data is switched from the 2-dimensional image data to the stereoscopic image data at a timing Tb. The AVC video descriptor in which the mode information of "cropping_interpretation_mode" corresponding to the switched image data is described is acquired at a timing Ta prior to the timing Tb.

Since the switched image data is the stereoscopic image data, "Frame_Packing_SEI_not_present_flag = 0" and "cropping_interpretation_mode = 01" is set in the AVC video descriptor (AVC_video_descriptor). However, the image data is the 2-dimensional image data up to the timing Tb and the SEI of the "Frame Packing Arrangement SEI message" is not detected.

That is, even when the mode information of "cropping_interpretation_mode = 01" is acquired, the CPU 201 does not interpret the value of frame_crop_right_offset as being doubled up to the timing Tb, interprets the value without change, and performs the cropping control process. Therefore, the video decoder 214 correctly generates the image data SV for the 2-dimensional image display up to the timing Tb.

At the timing Tb, the SEI of "Frame Packing Arrangement SEI message" is detected. In the illustrated example, the type information of the stereoscopic image data included in the SEI is set to "3" and the image data is known to be the stereoscopic image data of the side by side scheme. The CPU 201 interprets the value of frame_crop_right_offset as being doubled from the timing Tb and performs the cropping control process. Therefore, the video decoder 214 correctly generates the image data SL and the image data SR for the stereoscopic image display from the timing Tb.

Likewise, in the illustrated example, the image data is switched from the stereoscopic image data to the 2-dimensional image data at a timing Td. The AVC video descriptor in which the mode information of "cropping_interpretation_mode" corresponding to the switched image data is described is acquired at a timing Tc prior to the timing Td.

Since the switched image data is the 2-dimensional image data, "Frame_Packing_SEI_not_present_flag = 1" and "cropping_interpretation_mode = 11" is set in the AVC video descriptor (AVC_video_descriptor). However, the image data is the stereoscopic image data up to the timing Td and the SEI of the "Frame Packing Arrangement SEI message" is detected.

That is, even when the flag information of "cropping_interpretation_mode = 11" is acquired, the CPU 201 continuously interpret the value of frame_crop_right_offset as being doubled up to the timing Td and performs the cropping control process. Therefore, the video decoder 214 correctly generates the image data SL and the image data SR for the stereoscopic image display up to the timing Td. This can be realized by storing "cropping_interpretation_mode" = "01" or "10" in the receiver in the previous state.

On the other hand, in Fig. 21, in order to perform correct display even when the channel is switched at the timing Td, a display range can be determined by normally setting "cropping_interpretation_mode" to "01" or "10" and causing the receiver side to interpret the parameter value of the cropping information.

When the image data is the stereoscopic image data of the side by side scheme, the receiver side performs the interpretation as follows. That is, when the cutout region can be determined to be the left half, the interpretation is performed as "frame_crop_right_offset = frame_crop_right_offset * 2" by substituting the right-hand side into the left-hand side. Further, when the cutout region can be determined to be the right half, the interpretation is performed as "frame_crop_left_offset = 0" by substituting the right-hand side into the left-hand side.

When the image data is the stereoscopic image data of the top and bottom scheme, the receiver side performs the interpretation as follows. That is, when the cutout region can be determined to be top half, the interpretation is performed as "frame_crop_bottom_offset = frame_crop_bottom_offset * 2" by substituting the right-hand side into the left-hand side. Further, when the cutout region can be determined to be the bottom half, the interpretation is performed as "frame_crop_top_offset = 0" by substituting the right-hand side into the left-hand side.

Alternatively, when the interpretation of the parameter value of the cropping information is set for each event, the realization can be made by the above-described arrangement, as in Fig. 16(b), that is, the insertion of "Cropping_interpretation_descriptor" under the EIT.

At the timing Td, the SEI of "Frame Packing Arrangement SEI message" is not detected. The CPU 201 interprets the parameter value of the cropping information without change from the timing Td and performs the cropping control process. Therefore, the video decoder 214 correctly generates the image data SV for 2-dimensional image display from the timing Td.

Thus, even when the mode information of "cropping_interpretation_mode" is described as the interpretation information in the descriptor, the receiver 200 can perform the same process as the process of the above-described embodiment. That is, even in this case, it is possible to obtain the same advantages as those of the above-described embodiment.

In the above-described embodiment, the example has been described in which the image data is subjected to the encoding of H.264/AVC. However, for example, the image data may be subjected to another encoding of MPEG2 video or the like. For example, the image data may be subjected to still another encoding of HEVC (High Efficiency Video Coding) or the like. When the encoding of MPEG2 video is performed, the type information of the stereoscopic image data is inserted into, for example, a picture header.

In the above-described embodiment, the image transmission and reception system 10 including the broadcast station 100 and the receiver 200 has been described. However, the configuration of an image transmission and reception system to which the present technology is applicable is not limited thereto. For example, the receiver 200 may include a set-top box and a monitor connected by a digital interface such as the HDMI (High-Definition Multimedia Interface).

In the above-described embodiment, the example has been described in which the container is the transport stream (MPEG-2TS). However, the present technology is likewise applicable to a system configured such that information is delivered to a reception terminal using a network such as the Internet. In the delivery of the Internet, information is delivered with containers of MP4 or other formats in many cases. That is, the transport stream (MPEG-2TS) used according to the digital broadcast standard and containers of various formats such as MP4 used in delivery of the Internet correspond to the container.

The present technology can be configured as follows.
(1) An image data transmission device includes:
   an image data transmission unit that transmits a container of a predetermined format having a video stream which includes image data and in which cropping information is inserted into a header portion; and
   an information insertion unit that inserts interpretation information of a parameter value of the cropping information into a high-order layer of the video stream.
(2) In the image data transmission device described in (1) above, the interpretation information indicates that the parameter value of the cropping information is specially interpreted,
   when the image data is stereoscopic image data in which left-eye image data and right-eye image data are divided and arranged in a horizontal direction or a vertical direction in the same frame.
(3) In the image data transmission device described in (2) above, the interpretation information indicates that the parameter value of the cropping information is interpreted such that a cropping region is doubled in the horizontal direction or the vertical direction.
(4) In the image data transmission device described in any one of (1) to (3) above,
   the image data is one of 2-dimensional image data and stereoscopic image data in which left-eye image data and right-eye image data are divided and arranged in a horizontal direction or a vertical direction in the same frame.
   The information insertion unit inserts the interpretation information changed according to switched image data into a high-order layer of the video stream at a timing prior to a switching timing of the two-dimensional image data and the stereoscopic image data.
(5) In the image data transmission device described in any one of (1) to (4) above, the container is a transport stream.
   The information insertion unit inserts the interpretation information under one of a program map table and an event information table.
(6) In the image data transmission device described in (5) above,
   the information insertion unit describes the interpretation information in a descriptor inserted under one of the program map table and the event information table.
(7) In the image data transmission device described in (6) above,
   the video stream is encoded data of one of H.264/AVC and HEVC.
   The cropping information is defined in a sequence parameter set of the video stream.
   The information insertion unit describes the interpretation information in the descriptor inserted under one of the program map table and the event information table.
(8) An image data transmission method includes:
   an image data transmission step of transmitting a container of a predetermined format having a video stream which includes image data and in which cropping information is inserted into a header portion;
   and an information insertion step of inserting interpretation information of a parameter value of the cropping information into a high-order layer of the video stream.
(9) An image data reception device includes
   an image data reception unit that receives a container of a predetermined format having a video stream which includes image data and in which cropping information is inserted into a header portion.
   Interpretation information of a parameter value of the cropping information is inserted into a high-order layer of the video stream.
   The image data reception device further includes an information acquisition unit that acquires the interpretation information from the container;
   a decoding unit that decodes the video stream included in the container to acquire the image data and the cropping information;
   and an image data processing unit that interprets the parameter value of the cropping information based on the interpretation information and cuts out image data of a predetermined region from the image data to generate display image data.
(10) In the image data reception device described in (10) above,
   the image data is one of 2-dimensional image data and stereoscopic image data in which left-eye image data and right-eye image data are divided and arranged in a horizontal direction or a vertical direction in the same frame.
   At a timing prior to a switching timing of the two-dimensional image data and the stereoscopic image data, the interpretation information changed according to the switched image data is inserted into a high-order layer of the video stream.
   From the switching timing of the image data, the image data processing unit interprets the parameter value of the cropping information based on the interpretation information inserted at a timing prior to the switching timing and changed according to the switched image data.
(11) An image data reception method includes:
   an image data reception step of receiving a container of a predetermined format having a video stream which includes image data and in which cropping information is inserted into a header portion.
   Interpretation information of a parameter value of the cropping information is inserted into a high-order layer of the video stream.
   The image data reception method further includes an information acquisition step of acquiring the interpretation information from the container;
   a decoding step of decoding the video stream included in the container to acquire the image data and the cropping information;
   and an image data processing step of interpreting the parameter value of the cropping information based on the interpretation information and cutting out image data of a predetermined region from the image data to generate display image data.

As the main characteristics of the present technology, when a transport stream (container) of a predetermined format having a video stream in which cropping information is inserted into a header portion is transmitted, an image data cutout process (cropping) using the cropping information on the reception side can be normally performed appropriately by inserting interpretation information of a parameter value of the cropping information into a high-order layer of the video stream (see Figs. 4 and 5).

### Reference Signs List

- 10: IMAGE TRANSMISSION AND RECEPTION SYSTEM
- 100: BROADCAST STATION
- 110: TRANSMISSION DATA GENERATION UNIT
- 111: DATA EXTRACTION UNIT
- 111a: DATA RECORDING MEDIUM
- 112: VIDEO ENCODER
- 113: AUDIO ENCODER
- 114: MULTIPLEXER
- 200: RECEIVER
- 201: CPU
- 202: FLASH ROM
- 203: DRAM
- 204: INTERNAL BUS
- 205: REMOTE CONTROL RECEPTION UNIT (RC RECEPTION UNIT)
- 206: REMOTE CONTROL TRANSMISSION UNIT (RC TRANSMISSION UNIT)
- 210: ANTENNA TERMINAL
- 211: DIGITAL TUNER
- 213: DEMULTIPLEXER
- 214: VIDEO DECODER
- 217L, 217R: VIEW BUFFER
- 218: AUDIO DECODER
- 219: CHANNEL PROCESSING UNIT

## Claims

1. An image data transmission device comprising:
an image data transmission unit that transmits a container of a predetermined format having a video stream which includes image data and in which cropping information is inserted into a header portion; and
an information insertion unit that inserts interpretation information of a parameter value of the cropping information into a high-order layer of the video stream.

2. The image data transmission device according to claim 1, wherein the interpretation information indicates that the parameter value of the cropping information is specially interpreted, when the image data is stereoscopic image data in which left-eye image data and right-eye image data are divided and arranged in a horizontal direction or a vertical direction in the same frame.

3. The image data transmission device according to claim 2, wherein the interpretation information indicates that the parameter value of the cropping information is interpreted such that a cropping region is doubled in the horizontal direction or the vertical direction.

4. The image data transmission device according to claim 1,
wherein the image data is one of 2-dimensional image data and stereoscopic image data in which left-eye image data and right-eye image data are divided and arranged in a horizontal direction or a vertical direction in the same frame, and
wherein the information insertion unit inserts the interpretation information changed according to switched image data into a high-order layer of the video stream at a timing prior to a switching timing of the two-dimensional image data and the stereoscopic image data.

5. The image data transmission device according to claim 1,
wherein the container is a transport stream, and
wherein the information insertion unit inserts the interpretation information under one of a program map table and an event information table.

6. The image data transmission device according to claim 5,
wherein the information insertion unit describes the interpretation information in a descriptor inserted under one of the program map table and the event information table.

7. The image data transmission device according to claim 6,
wherein the video stream is encoded data of one of H.264/AVC and HEVC,
wherein the cropping information is defined in a sequence parameter set of the video stream, and
wherein the information insertion unit describes the interpretation information in the descriptor inserted under one of the program map table and the event information table.

8. An image data transmission method comprising:
an image data transmission step of transmitting a container of a predetermined format having a video stream which includes image data and in which cropping information is inserted into a header portion; and
an information insertion step of inserting interpretation information of a parameter value of the cropping information into a high-order layer of the video stream.

9. An image data reception device comprising:
an image data reception unit that receives a container of a predetermined format having a video stream which includes image data and in which cropping information is inserted into a header portion,
wherein interpretation information of a parameter value of the cropping information is inserted into a high-order layer of the video stream, and
wherein the image data reception device further includes:
an information acquisition unit that acquires the interpretation information from the container;
a decoding unit that decodes the video stream included in the container to acquire the image data and the cropping information; and
an image data processing unit that interprets the parameter value of the cropping information based on the interpretation information and cuts out image data of a predetermined region from the image data to generate display image data.

10. The image data reception device according to claim 9,
wherein the image data is one of 2-dimensional image data and stereoscopic image data in which left-eye image data and right-eye image data are divided and arranged in a horizontal direction or a vertical direction in the same frame,
wherein at a timing prior to a switching timing of the two-dimensional image data and the stereoscopic image data, the interpretation information changed according to the switched image data is inserted into a high-order layer of the video stream, and
wherein from the switching timing of the image data, the image data processing unit interprets the parameter value of the cropping information based on the interpretation information inserted at a timing prior to the switching timing and changed according to the switched image data.

11. An image data reception method comprising:
an image data reception step of receiving a container of a predetermined format having a video stream which includes image data and in which cropping information is inserted into a header portion,
wherein interpretation information of a parameter value of the cropping information is inserted into a high-order layer of the video stream, and
wherein the image data reception method further includes:
an information acquisition step of acquiring the interpretation information from the container;
a decoding step of decoding the video stream included in the container to acquire the image data and the cropping information; and
an image data processing step of interpreting the parameter value of the cropping information based on the interpretation information and cutting out image data of a predetermined region from the image data to generate display image data.
